(19) Europäisches Patentamt
European Patent Office
Office européen des brevets

(11) **EP 4 675 139 A1**

(12) **EUROPEAN PATENT APPLICATION**
published in accordance with Art. 153(4) EPC

(43) Date of publication:
**07.01.2026 Bulletin 2026/02**

(21) Application number: 23925426.1

(22) Date of filing: **19.12.2023**

(51) International Patent Classification (IPC):
**F16K 31/04** (2006.01)   **F16K 37/00** (2006.01)
**H02P 8/08** (2006.01)

(52) Cooperative Patent Classification (CPC):
**F16K 31/04; F16K 37/00; H02P 8/08**

(86) International application number:
**PCT/JP2023/045452**

(87) International publication number:
**WO 2024/180876 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.03.2023 JP 2023031150**

(71) Applicant: **Fujikoki Corporation
Tokyo 158-0082 (JP)**

(72) Inventors:
• **YAMADA, Kento
Tokyo 158-0082 (JP)**
• **WATANABE, Takayuki
Tokyo 158-0082 (JP)**

(74) Representative: **Ter Meer Steinmeister & Partner
Patentanwälte mbB
Artur-Ladebeck-Strasse 51
33617 Bielefeld (DE)**

(54) **MOTORIZED VALVE CONTROL DEVICE, MOTORIZED VALVE DEVICE, AND MOTORIZED VALVE CONTROL METHOD**

(57)     [Problem] To provide a motor-operated valve control device, a motor-operated valve device including a motor-operated valve control device, and a method for controlling a motor-operated valve that are capable of reducing a duration of an initialization operation for the motor-operated valve and suppressing noise.

[Solution] A motor-operated valve 5 includes a stepping motor 66 including a rotor 41 and a stator 60. The stator 60 is connected to a current circuit with a switching element. A motor-operated valve control device 70 obtains an off-time of the switching element when a driving current for rotating the rotor 41 in a first direction is supplied to the stator 60. The motor-operated valve control device 70 determines, based on the off-time, whether the motor-operated valve 5 is in a first-rotation restricted state where the rotation of the rotor 41 in the first direction is restricted.

FIG.2

**Description**

Technical Field

The present invention relates to a motor-operated valve control device, a motor-operated valve device including a motor-operated valve control device, and a method for controlling a motor-operated valve.

Background Art

Patent Literature 1 discloses an example of a motor-operated valve according to the related art. The motor-operated valve is installed in a refrigeration cycle system of an air conditioner. The motor-operated valve includes a valve body, a valve member, and a stepping motor for moving the valve member. The stepping motor includes a rotor and a stator. The rotor rotates in response to a pulse input to the stepping motor. The valve member moves along with the rotation of the rotor. When the rotor is at a reference position, a movable stopper rotating with the rotor is in contact with a fixed stopper fixed to the valve body, thereby restricting the rotor from rotating in a first direction.

The motor-operated valve is controlled by a motor-operated valve control device. In an initialization operation, the motor-operated valve control device inputs pulses to the stepping motor to rotate the rotor in the first direction and positions the rotor at the reference position. A sufficient number of pulses are input to the stepping motor to bring the movable stopper into contact with the fixed stopper. This number is hereinafter referred to as an "initialization number". When the rotor rotates in the first direction and the movable stopper comes into contact with the fixed stopper, the rotor is positioned at the reference position.

Citation List

Patent Literature

Patent Literature 1: WO2019/130928

Summary of Invention

Technical Problem

The motor-operated valve control device inputs pulses to the stepping motor until the number of pulses input to the stepping motor reaches the initialization number. Thus, the motor-operated valve control device may further input pulses after the rotor is positioned at the reference position, resulting in a long duration of the initialization operation. Additionally, when pulses are input to the stepping motor after the rotor is positioned at the reference position, the movable stopper repeatedly collides with the fixed stopper, thereby generating noise. Especially when the rotor is near the reference position immediately before the initialization operation starts, the noise lasts a long time.

Accordingly, it is an object of the present invention to provide a motor-operated valve control device, a motor-operated valve device including a motor-operated valve control device, and a method for controlling a motor-operated valve that are capable of reducing a duration of an initialization operation for the motor-operated valve and suppressing noise.

Solution to Problem

When the pulse is input to the stepping motor, the rotor rotates. Specifically, when a driving current corresponding to the pulse is supplied to a coil of the stator of the stepping motor, the rotor rotates. The rotation of the rotor changes the magnetic flux passing through the coil, generating a voltage in the coil. This voltage is referred to as a back electromotive force (BEMF).

The stator is connected to a current circuit that supplies the driving current. The current circuit includes a switching element. The current circuit has a target value of the driving current and a lower limit value of the driving current, which is obtained by subtracting a fixed value from the target value. The current circuit operates using a method in which the switching element is turned on (i.e., the conductive state) when the driving current is less than the lower limit value and turned off (i.e., the non-conductive state) when the driving current reaches the target value. This method is hereinafter referred to as a "fixed ripple current control method". The off-time of the switching element is denoted as Toff and is given by Expression (1) below.

$$T_{off} = \frac{L * \Delta I}{(I * R) - BEMF} \quad \cdots \quad (1)$$

I represents the current flowing through the coil, R represents the resistance of the coil, L represents the inductance of the coil, and $\Delta I$ represents the fixed value. Toff is related to BEMF.

The inventors found that, before and after the rotation of the rotor in the first direction is restricted, the rotational state of the rotor in the motor-operated valve differs, and BEMF and Toff also differ. Based on these findings, the present invention was conceived.

To achieve the object above, a motor-operated valve control device according to an aspect of the present invention is provided for controlling a motor-operated valve including a valve body that has a valve port, a stepping motor that includes a rotor and a stator, a valve member that faces the valve port and moves toward the valve port when the rotor rotates in a first direction, and a stopper mechanism that restricts rotation of the rotor in the first direction when the rotor is at a reference position.

The stator is connected to a current circuit that supplies a driving current.

The current circuit includes a switching element and is configured to operate according to a method in which the switching element is turned on when the driving current is less than a lower limit value obtained by subtracting a fixed value from a target value and turned off when the driving current reaches the target value.

The motor-operated valve control device includes:

an off-time obtaining unit configured to obtain an off-time of the switching element when the driving current for rotating the rotor in the first direction is supplied to the stator, and

a state determining unit configured to determine, based on the off-time, whether the motor-operated valve is in a first-rotation restricted state where the rotation of the rotor in the first direction is restricted.

In the present invention, preferably, the state determining unit is configured to determine, based on a degree of difference between a waveform of a reciprocal of the off-time obtained by the off-time obtaining unit and a reference waveform of the reciprocal of the off-time, whether the motor-operated valve is in the first-rotation restricted state.

In the present invention, preferably, the reference waveform is set based on the waveform of the reciprocal of the off-time obtained when the driving current for rotating the rotor in the first direction is supplied to the stator.

Preferably, the state determining unit is configured to calculate a difference-degree score indicating the degree of the difference between the waveform of the reciprocal of the off-time obtained by the off-time obtaining unit and the reference waveform, and determine, based on a result of comparing the difference-degree score with a difference-degree score threshold, whether the motor-operated valve is in the first-rotation restricted state.

In the present invention, preferably, the reference waveform is represented as a data table including a time point and a reference value of the reciprocal of the off-time at the time point, the time point and the reference value being associated with each other.

Preferably, the state determining unit is configured to calculate an intermediate value that is a squared value of a difference value between the reciprocal of the off-time obtained by the off-time obtaining unit at an obtaining time corresponding to the time point and the reference value associated with the time point.

Preferably, the state determining unit is configured to calculate the difference-degree score by summing intermediate values each of which is the intermediate value.

In the present invention, preferably, the motor-operated valve control device further includes:

a rotation control unit configured to input a pulse to the stepping motor to rotate the rotor, and

a reference-waveform setting unit configured to set the reference waveform.

Preferably, the current circuit supplies the stator with the driving current corresponding to the pulse, in response to the pulse being input to the stepping motor.

Preferably, the rotation control unit is configured to perform a second preparation operation for inputting a second preparation number of pulses to the stepping motor to rotate the rotor in a second direction and perform a first preparation operation, following the second preparation operation, for inputting a first preparation number of pulses to the stepping motor to rotate the rotor in the first direction, the first preparation number being less than or equal to the second preparation number.

Preferably, the reference-waveform setting unit is configured to set as the reference waveform the waveform of the reciprocal of the off-time obtained by the off-time obtaining unit during the first preparation operation.

To achieve the object above, a motor-operated valve device according to another aspect of the present invention includes the motor-operated valve and the motor-operated valve control device.

To achieve the object above, a method according to another aspect of the present invention is provided for controlling a motor-operated valve including a valve body that has a valve port, a stepping motor that includes a rotor and a stator, a valve member that faces the valve port and moves toward the valve port when the rotor rotates in a first direction, and a stopper mechanism that restricts rotation of the rotor in the first direction when the rotor is at a reference position.

The stator is connected to a current circuit that supplies a driving current.

The current circuit includes a switching element and is configured to operate according to a method in which the switching element is turned on when the driving current is less than a lower limit value obtained by subtracting a fixed value from a target value and turned off when the driving current reaches the target value.

The method includes:

an off-time obtaining step for obtaining an off-time of the switching element when the driving current for rotating the rotor in the first direction is supplied to the stator, and

a state determining step for determining, based on the off-time, whether the motor-operated valve is in a first-rotation restricted state where the rotation of the rotor in the first direction is restricted.

Advantageous Effects of Invention

According to one aspect of the present invention, the motor-operated valve control device obtains the off-time of the switching element of the current circuit when the driving current for rotating the rotor in the first direction is supplied to the stator, and determines, based on the off-time, whether the motor-operated valve is in the first-rotation restricted state where the rotation of the rotor in the first direction is restricted.

With this configuration, when the motor-operated valve control device determines that the motor-operated valve capable of normal operation is in the first-rotation restricted state, the rotor is at the reference position. As a result, the motor-operated valve control device stops the rotation of the rotor in the first direction when determining that the motor-operated valve is in the first-rotation restricted state, thereby enabling the duration of the initialization operation to be reduced. Additionally, a long-lasting noise after the rotor is positioned at the reference position can be suppressed.

The motor-operated valve control device determines, based on the off-time of the switching element of the current circuit, whether the motor-operated valve is in the first-rotation restricted state. Consequently, a component, such as a rotational angle sensor, for determining the state of the motor-operated valve based on the rotation of the rotor is not required, enabling the configuration of the motor-operated valve and the motor-operated valve control device to be simplified.

For example, when the state of the motor-operated valve is determined based on a back electromotive force, since the back electromotive force is obtained when no driving current flows through a coil of the stator, the timing of obtaining the back electromotive force is limited. Alternatively, when the state of the motor-operated valve is determined based on the off-time, the off-time can be obtained even when the driving current flows through the coil of the stator. Therefore, the motor-operated valve control device can determine at an appropriate timing whether the motor-operated valve is in the first-rotation restricted state.

Brief Description of Drawings

[Fig. 1] Fig. 1 is a block diagram of an air conditioner including a motor-operated valve device.
[Fig. 2] Fig. 2 is a sectional view of the motor-operated valve device in Fig. 1.
[Fig. 3] Fig. 3 is a diagram illustrating a valve stem holder of the motor-operated valve device in Fig. 2.
[Fig. 4] Fig. 4 is a side view of a guide bush of the motor-operated valve device in Fig. 2.
[Fig. 5] Fig. 5 is a diagram illustrating a stopper member of the motor-operated valve device in Fig. 2.
[Fig. 6] Fig. 6 is a plan view of the valve stem holder, the stopper member, a rotor, and a stator of the motor-operated valve device in Fig. 2.
[Fig. 7] Fig. 7 is a diagram illustrating a computer, a motor driver including a current circuit with switching elements, and a stepping motor of the motor-operated valve device in Fig. 2.
[Fig. 8] Fig. 8 is a diagram illustrating an example of a correspondence between pulses input to the stepping motor and A-phase and B-phase current target values.
[Fig. 9] Fig. 9 is a diagram illustrating an example of waveforms of A-phase and B-phase currents.
[Fig. 10] Fig. 10 is a diagram schematically illustrating a positional relationship between magnetic poles of the rotor and pole teeth of the stator (when pulse P[1] is input).
[Fig. 11] Fig. 11 is a diagram schematically illustrating the positional relationship between the magnetic poles of the rotor and the pole teeth of the stator (when pulse P[2] is input).

[Fig. 12] Fig. 12 is a diagram schematically illustrating the positional relationship between the magnetic poles of the rotor and the pole teeth of the stator (when pulse P[3] is input).

[Fig. 13] Fig. 13 is a diagram schematically illustrating the positional relationship between the magnetic poles of the rotor and the pole teeth of the stator (when pulse P[4] is input).

[Fig. 14] Fig. 14 is a diagram schematically illustrating the positional relationship between the magnetic poles of the rotor and the pole teeth of the stator (when pulse P[5] is input).

[Fig. 15] Fig. 15 is a diagram schematically illustrating the positional relationship between the magnetic poles of the rotor and the pole teeth of the stator (when pulse P[6] is input).

[Fig. 16] Fig. 16 is a diagram schematically illustrating the positional relationship between the magnetic poles of the rotor and the pole teeth of the stator (when pulse P[7] is input).

[Fig. 17] Fig. 17 is a diagram schematically illustrating the positional relationship between the magnetic poles of the rotor and the pole teeth of the stator (when pulse P[8] is input).

[Fig. 18] Fig. 18 is a diagram illustrating an example of waveforms of the B-phase current and a back electromotive force generated in a B-phase coil.

[Fig. 19] Fig. 19 is a diagram illustrating an example of graphs of the rotational angle of the rotor, the B-phase current, the back electromotive force generated in the B-phase coil, and a reciprocal of an off-time of a switching element for the B-phase current.

[Fig. 20] Fig. 20 is a diagram illustrating an example of a waveform of the reciprocal of the off-time of the switching element when a driving current for rotating the rotor in a first direction is supplied (when a motor-operated valve is in a first-rotation permitted state).

[Fig. 21] Fig. 21 is a diagram illustrating an example of the waveform of the reciprocal of the off-time of the switching element when the driving current for rotating the rotor in the first direction is supplied (when the motor-operated valve is in a first-rotation restricted state).

[Fig. 22] Fig. 22 is a diagram illustrating an example of a data table of a reference waveform of the reciprocal of the off-time.

[Fig. 23] Fig. 23 is a diagram illustrating an example of the waveform of the reciprocal of the off-time and the reference waveform of the reciprocal of the off-time.

[Fig. 24] Fig. 24 is a flowchart illustrating Operation example 1 of the motor-operated valve control device according to an embodiment of the present invention.

[Fig. 25] Fig. 25 is a flowchart illustrating Operation example 1 (second preparation operation).

[Fig. 26] Fig. 26 is a flowchart illustrating Operation example 1 (first preparation operation).

[Fig. 27] Fig. 27 is a flowchart illustrating Operation example 1 (first preparation operation, following the flowchart in Fig. 26).

[Fig. 28] Fig. 28 is a flowchart illustrating Operation example 1 (positioning operation).

[Fig. 29] Fig. 29 is a flowchart illustrating Operation example 2 of the motor-operated valve control device according to an embodiment of the present invention.

[Fig. 30] Fig. 30 is a flowchart illustrating Operation example 2 (first preparation operation).

[Fig. 31] Fig. 31 is a flowchart illustrating Operation example 2 (first preparation operation, following the flowchart in Fig. 30).

[Fig. 32] Fig. 32 is a flowchart illustrating Operation example 2 (first preparation operation, following the flowchart in Fig. 31).

Description of Embodiments

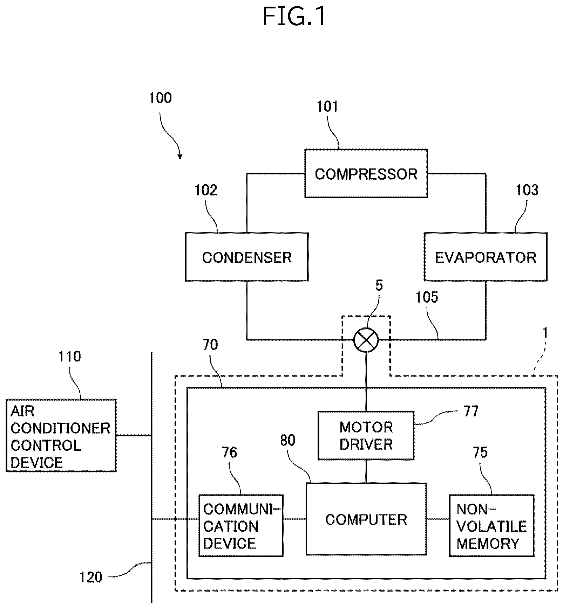

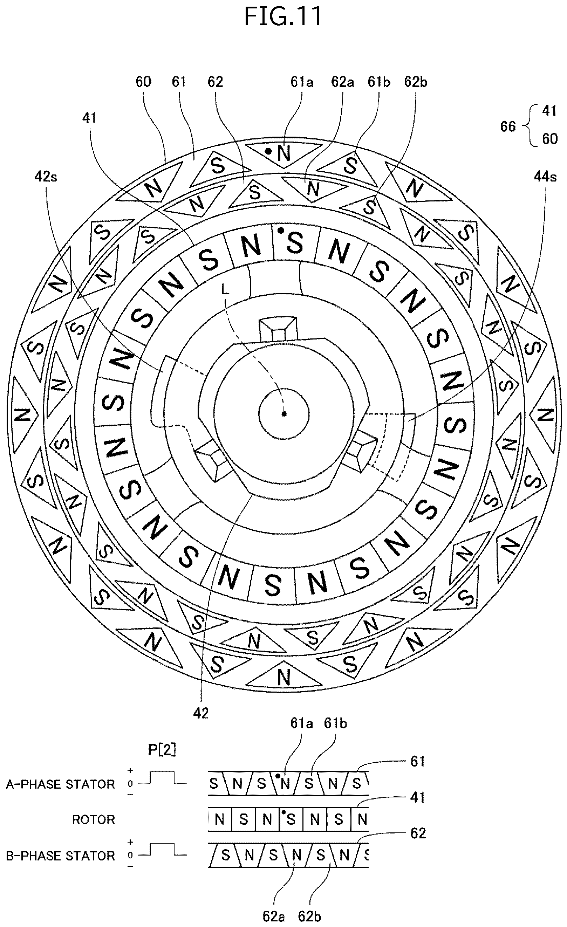

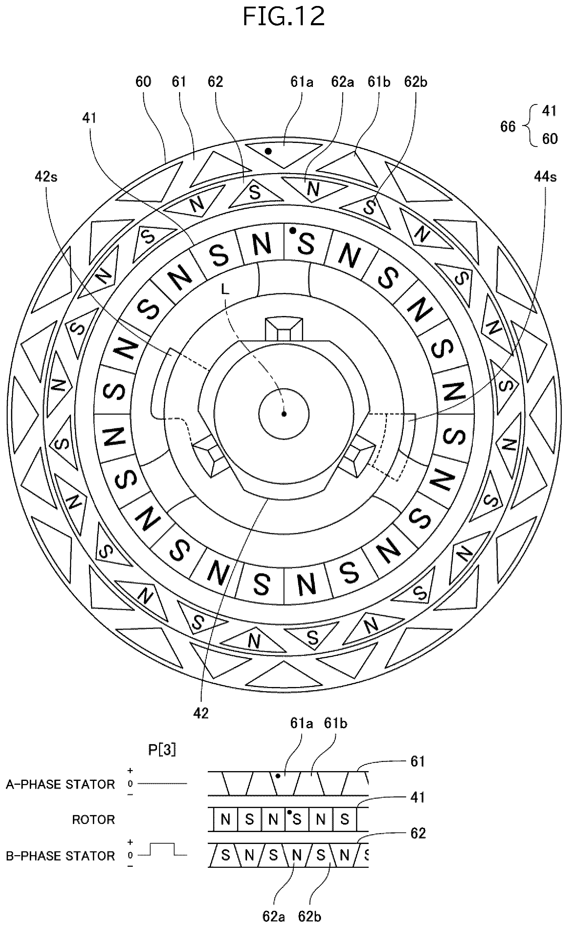

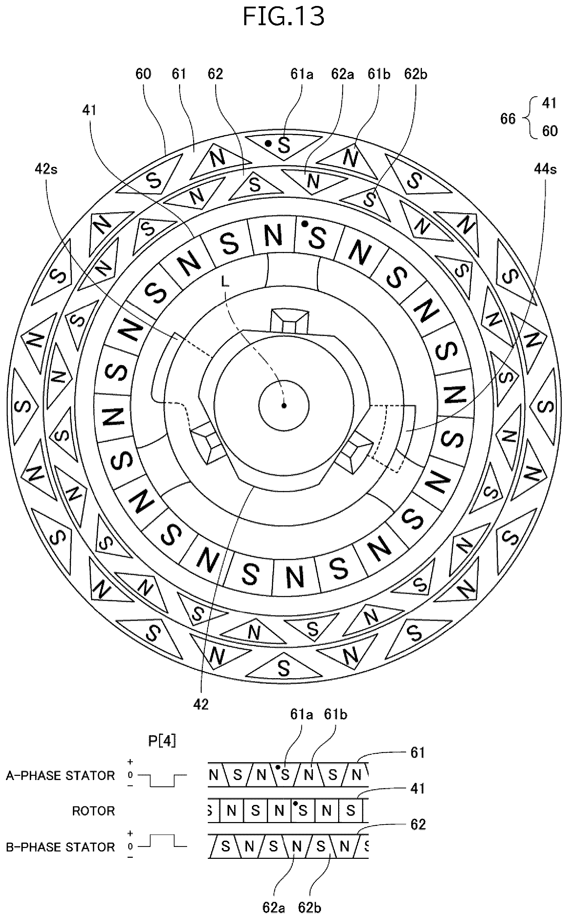

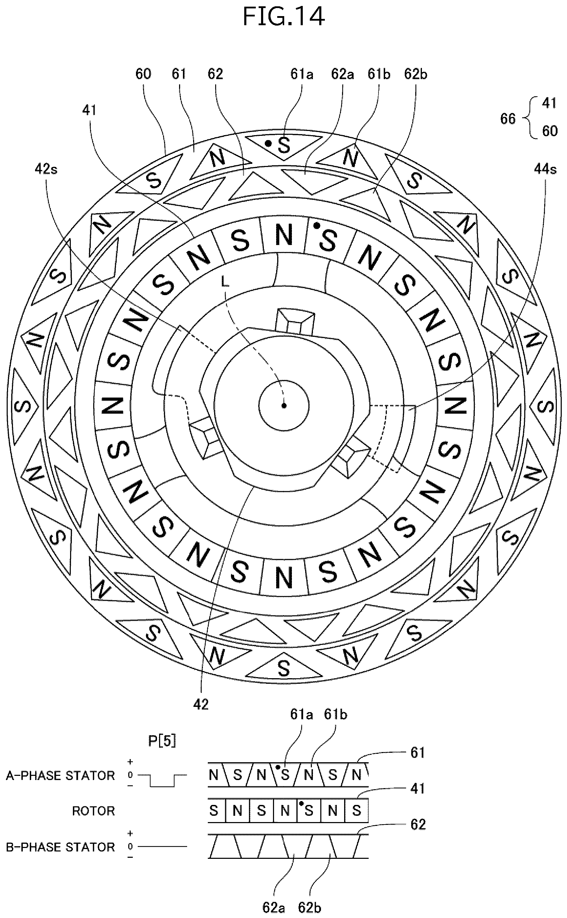

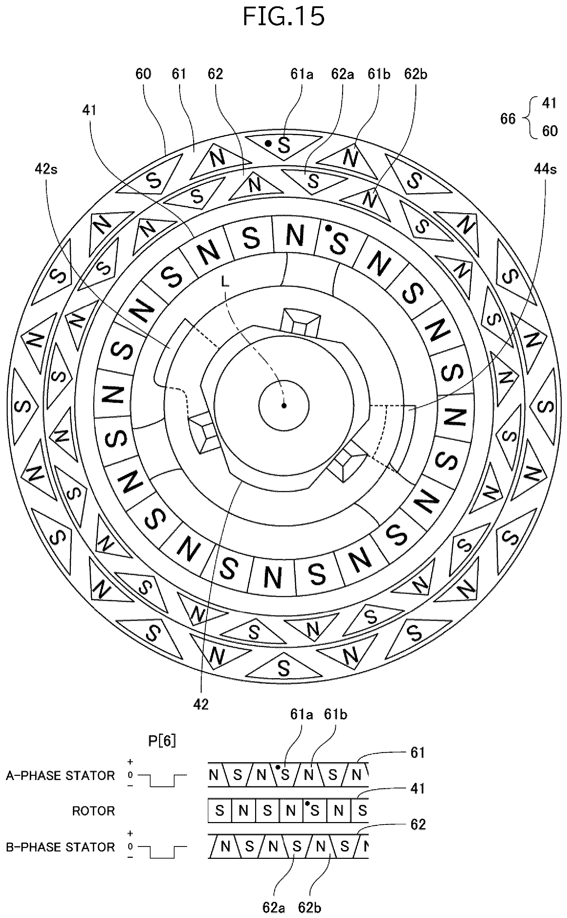

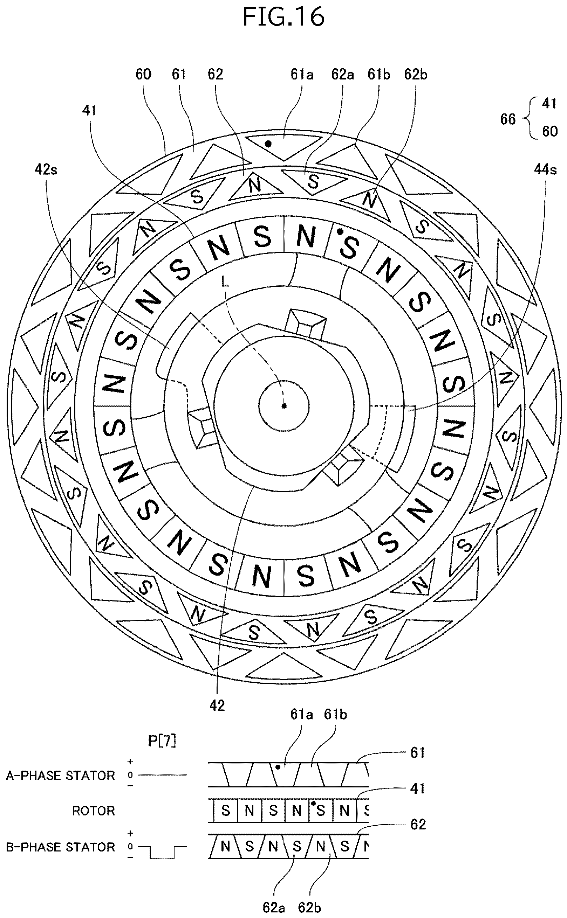

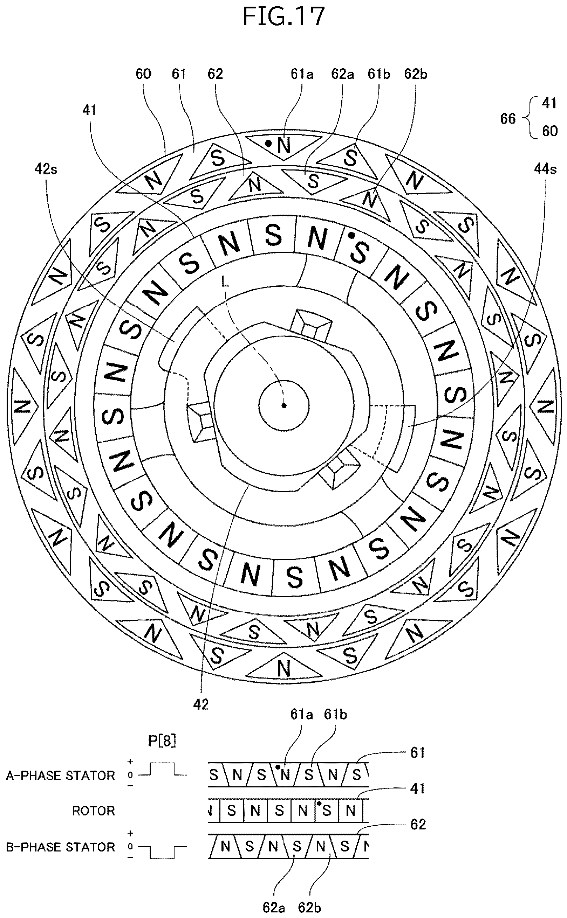

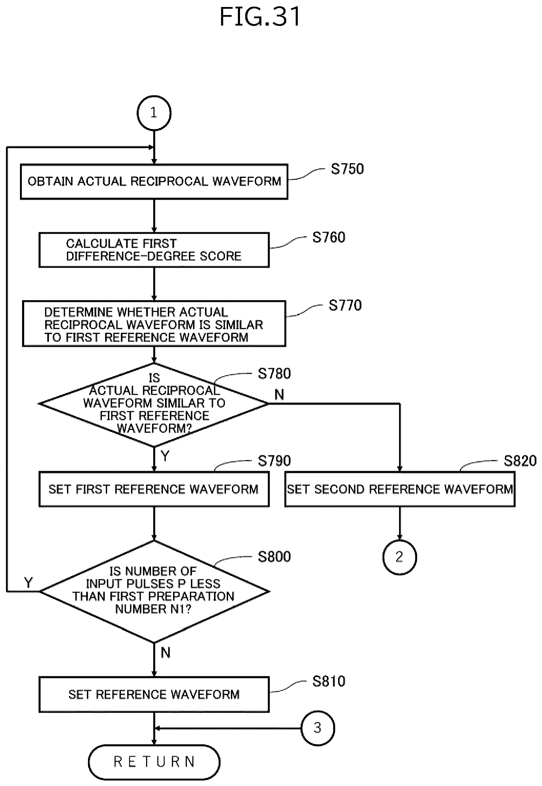

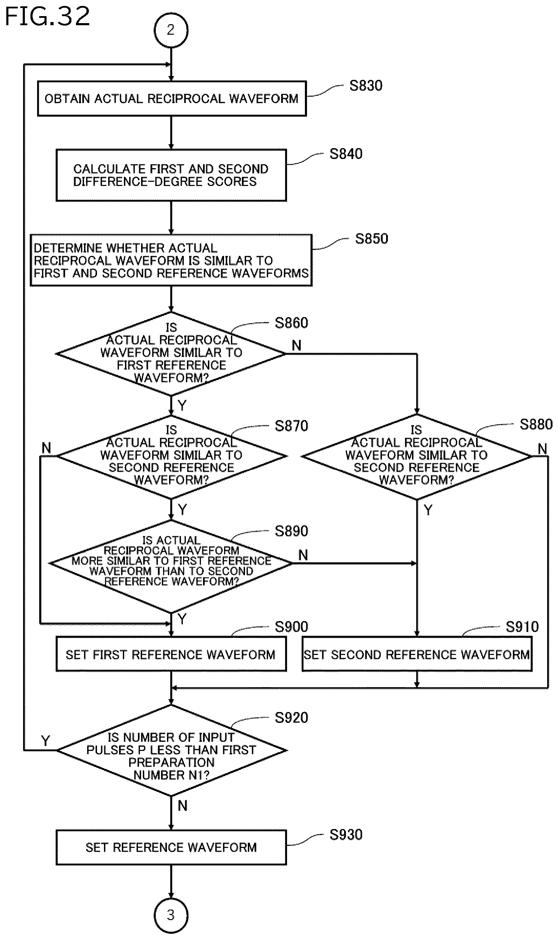

A motor-operated valve device is described below with reference to Figs. 1 to 32.

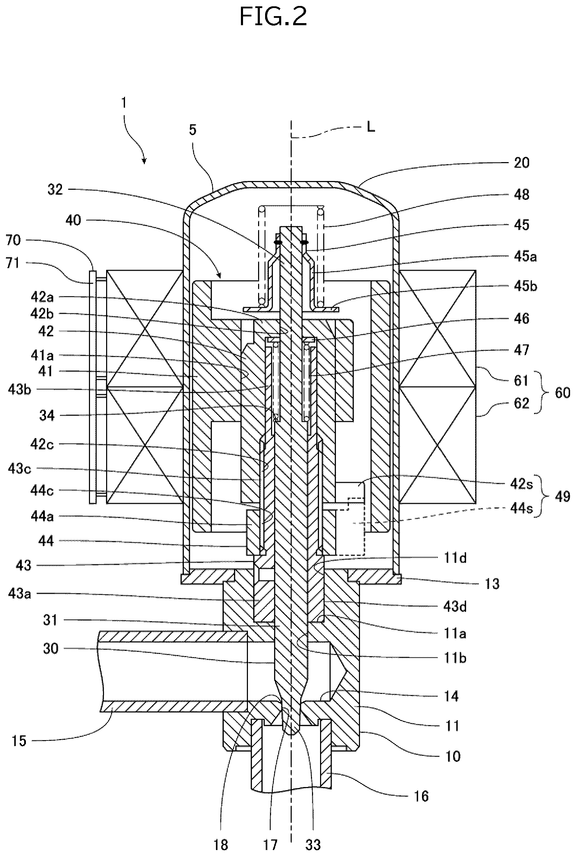

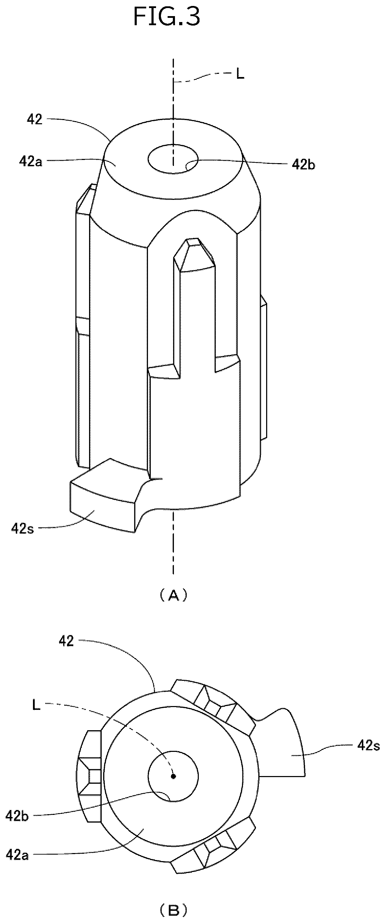

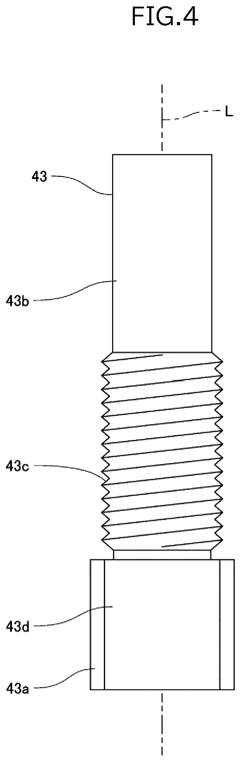

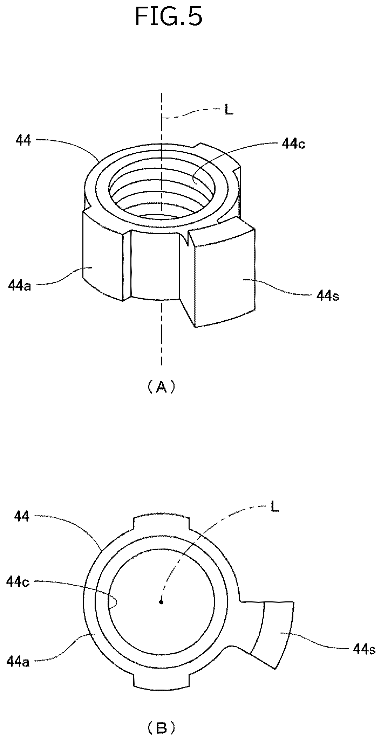

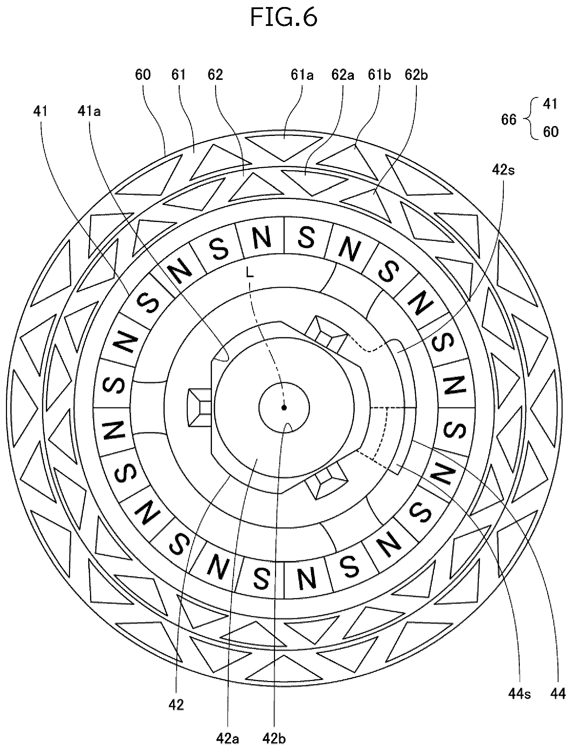

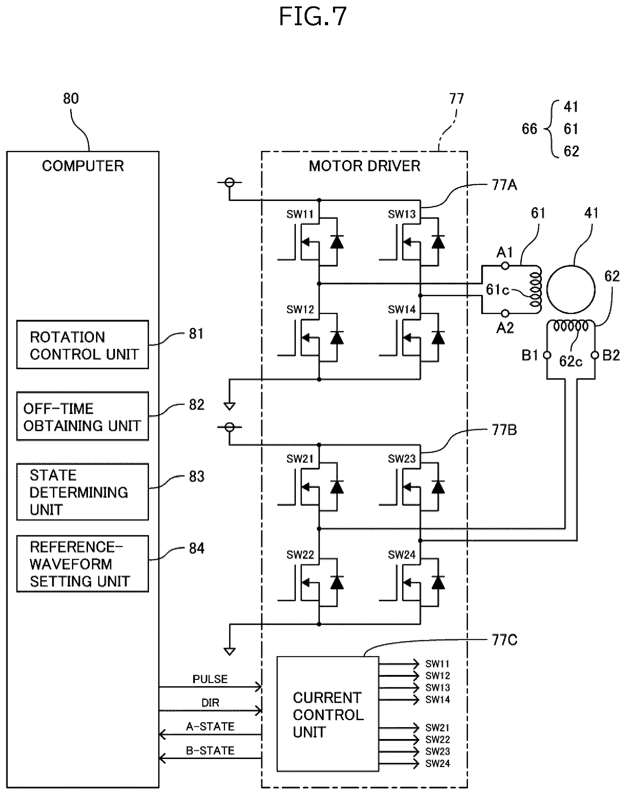

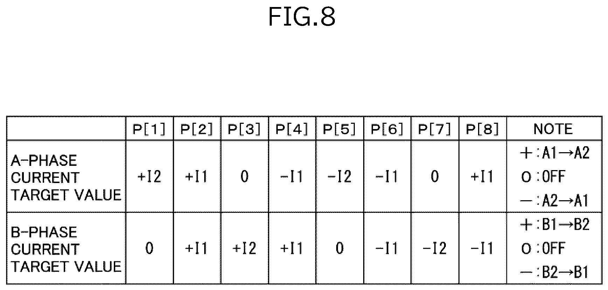

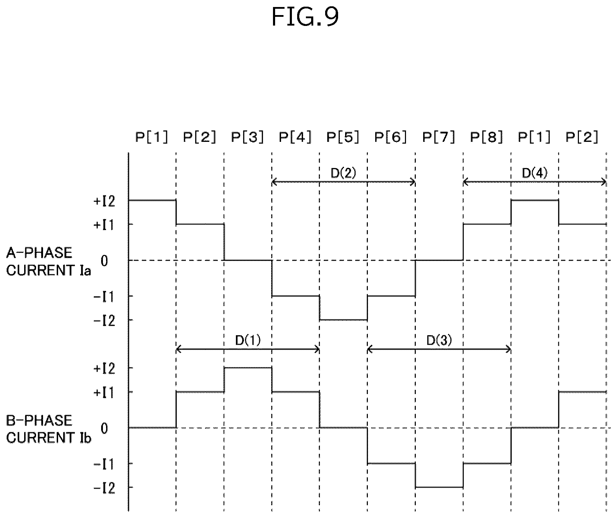

Fig. 1 is a block diagram of an air conditioner including a motor-operated valve device. Fig. 2 is a sectional view of the motor-operated valve device in Fig. 1. Fig. 3 is a diagram illustrating a valve stem holder of the motor-operated valve device in Fig. 2. Fig. 3A is a perspective view of the valve stem holder. Fig. 3B is a plan view of the valve stem holder. Fig. 4 is a side view of a guide bush of the motor-operated valve device in Fig. 2. Fig. 5 is a diagram illustrating a stopper member of the motor-operated valve device in Fig. 2. Fig. 5A is a perspective view of the stopper member. Fig. 5B is a plan view of the stopper member. Fig. 6 is a plan view of the valve stem holder, the stopper member, a rotor, and a stator of the motor-operated valve device in Fig. 2. Fig. 6 schematically illustrates the stator and magnetic poles of the rotor. Fig. 7 is a diagram illustrating a computer, a motor driver including a current circuit with switching elements, and a stepping motor of the motor-operated valve device in Fig. 2. Fig. 8 is a diagram illustrating an example of a correspondence between pulses input to the stepping motor and A-phase and B-phase current target values. Fig. 9 is a diagram illustrating an example of waveforms of A-phase and B-phase currents.

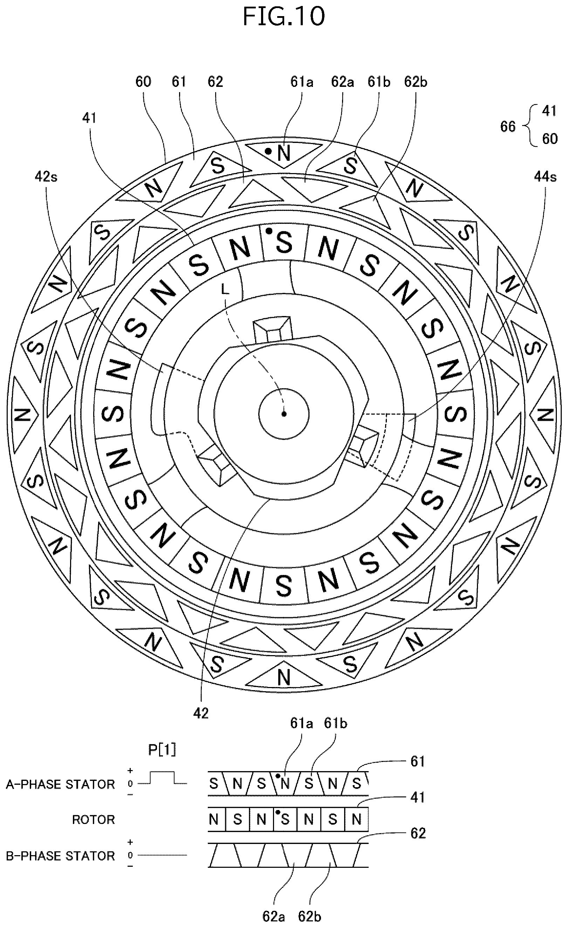

Figs. 10 to 17 are diagrams schematically illustrating positional relationships between the magnetic poles of the rotor and pole teeth of the stator. Figs. 10 to 17 show when pulses P[1] to P[8] are input to the stepping motor. Figs. 10 to 17 schematically illustrate the stator and the magnetic poles of the rotor.

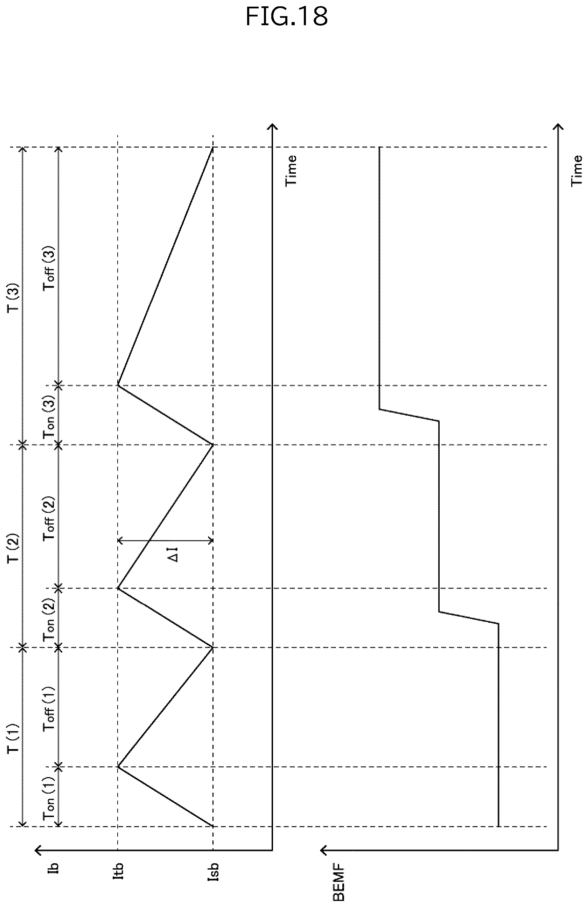

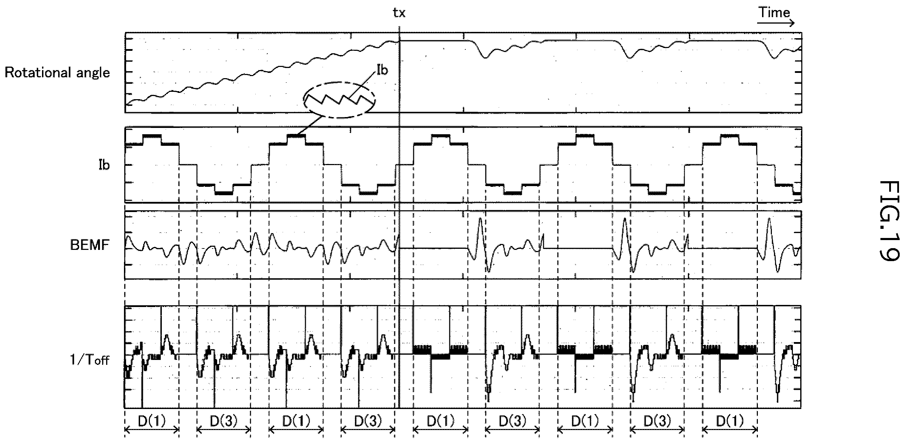

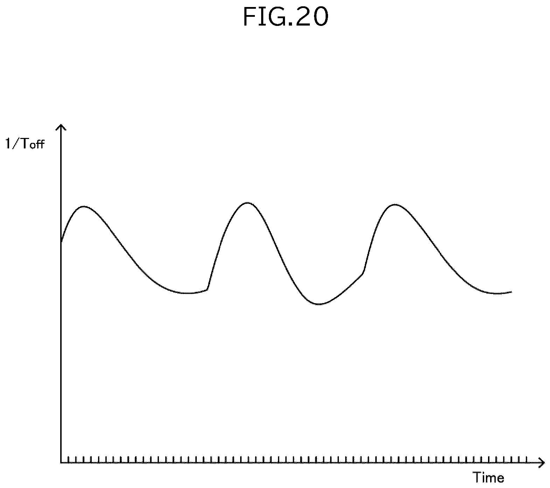

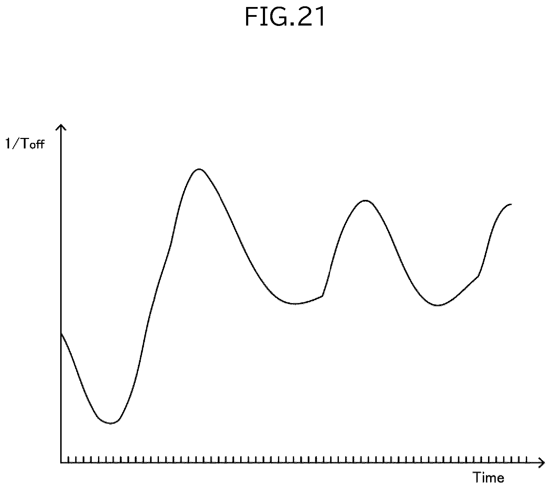

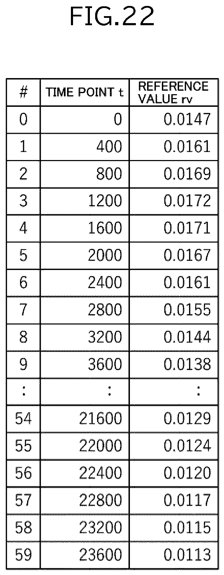

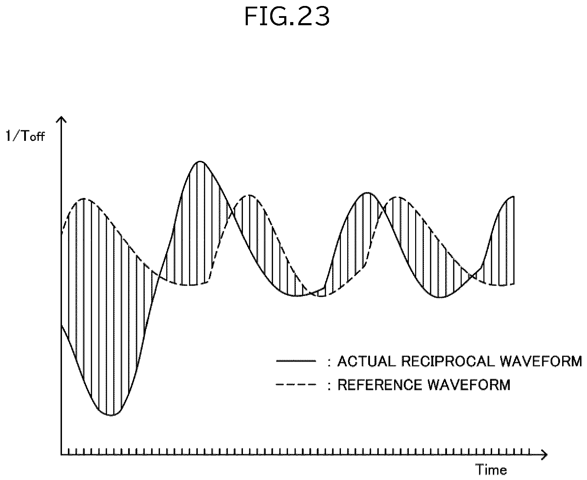

Fig. 18 is a diagram illustrating an example of waveforms of the B-phase current and a back electromotive force generated in a B-phase coil. Fig. 19 illustrates an example of graphs of the rotational angle of the rotor, the B-phase current, the back electromotive force generated in the B-phase coil, and a reciprocal of an off-time of a switching element for the B-phase current. Figs. 20 and 21 illustrate examples of a waveform of the reciprocal of the off-time of the switching element when a driving current for rotating the rotor in a first direction is supplied. Fig. 20 illustrates the waveform when the motor-operated valve is in a state where the rotation of the rotor in the first direction is permitted. Fig. 21 illustrates the waveform when the motor-operated valve is in a state where the rotation of the rotor in the first direction is restricted. Fig. 22 is a diagram illustrating an example of a data table of a reference waveform of the reciprocal of the off-time. Fig. 23 is a diagram illustrating an example of the waveform (an actual reciprocal waveform) of the reciprocal of the off-time and the reference waveform of the reciprocal of the off-time.

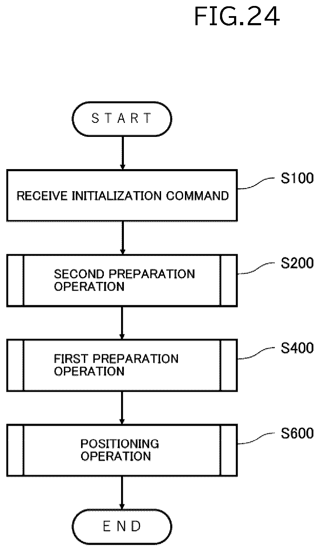

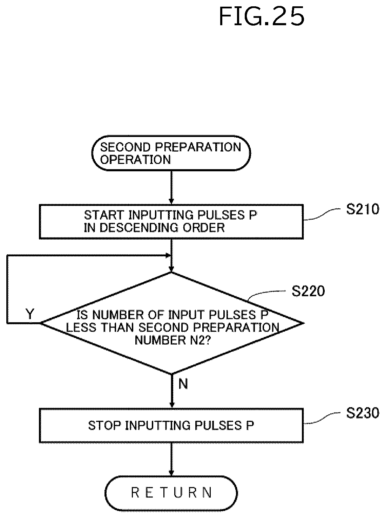

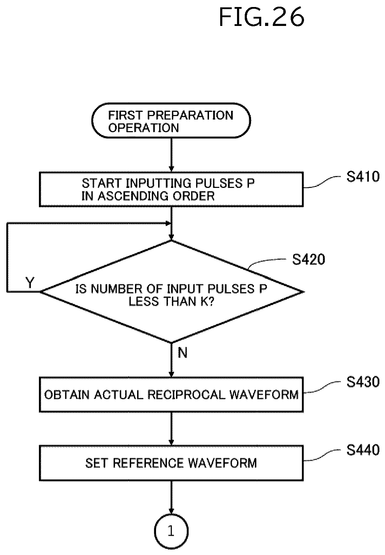

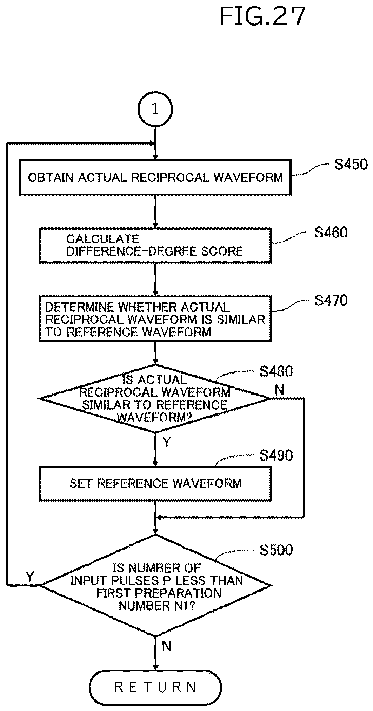

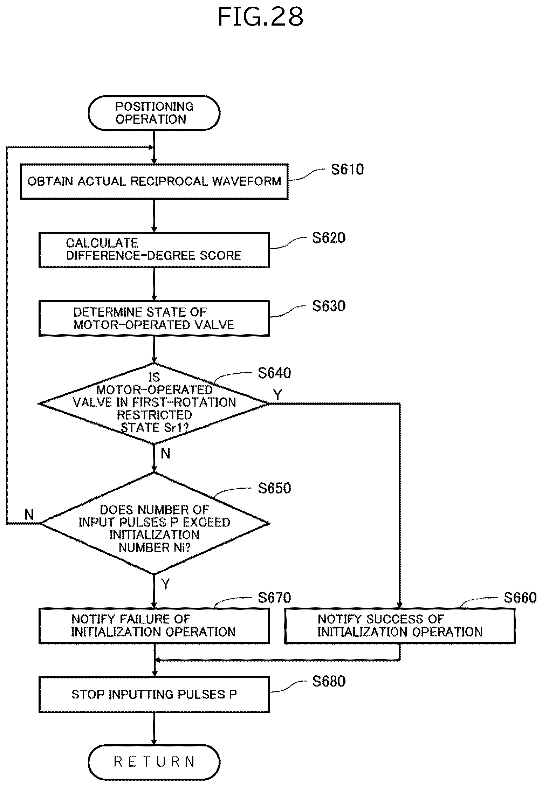

Figs. 24 to 28 are flowcharts illustrating Operation example 1 of the motor-operated valve control device according to an embodiment of the present invention. Fig. 24 shows a main routine of Operation example 1. Fig. 25 shows a second preparation operation of Operation example 1. Figs. 26 and 27 show a first preparation operation of Operation example 1. Fig. 28 shows a positioning operation of Operation example 1.

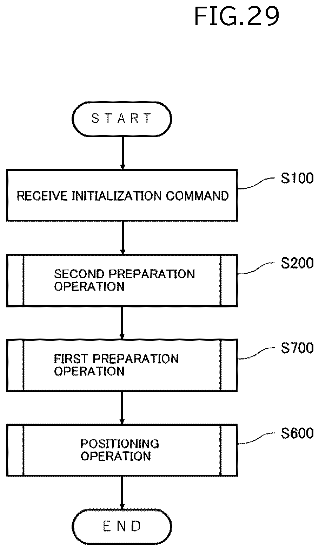

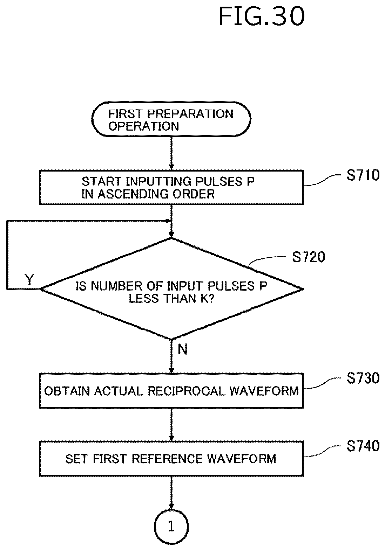

Figs. 29 to 32 are flowcharts illustrating Operation example 2 of the motor-operated valve control device according to an embodiment of the present invention. Fig. 29 shows a main routine of Operation example 2. Figs. 30 to 32 show a first preparation operation of Operation example 2.

A motor-operated valve device 1 according to the embodiment is used as, for example, a flow control valve for controlling the flow rate of refrigerant as fluid in a refrigeration cycle system of an air conditioner.

Fig. 1 illustrates an example of an air conditioner 100 mounted in a vehicle. The air conditioner 100 includes a compressor 101, a condenser 102, the motor-operated valve device 1 (including motor-operated valve 5), and an evaporator 103, which are connected in this order by a pipe 105. The motor-operated valve device 1 functions as an expansion valve. The air conditioner 100 includes an air conditioner control device 110. The air conditioner control device 110 is connected to the motor-operated valve device 1 and can communicate with the motor-operated valve device 1. The air conditioner control device 110 uses the motor-operated valve device 1 to control the flow rate of refrigerant flowing through the pipe 105.

As illustrated in Fig. 2, the motor-operated valve device 1 includes the motor-operated valve 5 and a motor-operated valve control device 70.

The motor-operated valve 5 includes a valve body 10, a can 20, a valve member 30, a driving mechanism 40, and a stator 60.

The valve body 10 includes a body member 11 and a connection member 13. The body member 11 has a circular columnar shape. The body member 11 has a valve chamber 14, a valve port 17, and a valve seat 18. A first conduit 15 and a second conduit 16 are bonded to the body member 11. The first conduit 15 is disposed in a direction (a lateral direction in Fig. 2) perpendicular to an axis L and is connected to the valve chamber 14. The second conduit 16 is disposed in a direction (an up-and-down direction in Fig. 2) of the axis L and is connected to the valve chamber 14 via the valve port 17. The valve port 17 is enclosed by the valve seat 18, which has a circular annular shape, in the valve chamber 14. The body member 11 has a fitting hole 11a, which has a circular shape. The fitting hole 11a is provided in the upper end surface of the body member 11. The inner circumferential surface of the fitting hole 11a includes a planar part 11d facing leftward in Fig. 2. A through hole 11b is provided at the bottom of the fitting hole 11a and communicates with the valve chamber 14. The connection member 13 has a circular annular plate-like shape. The inner peripheral edge of the connection member 13 is bonded to the upper end of the body member 11. The body member 11 and the connection member 13 are made of a metal, such as an aluminum alloy, stainless steel, or brass.

The can 20 is made of a metal, such as stainless steel. The can 20 has a circular cylindrical shape. The can 20 is open at the lower end and is closed at the upper end. The lower end of the can 20 is bonded to the outer peripheral edge of the connection member 13.

The valve member 30 includes a first stem portion 31, a second stem portion 32, and a plug portion 33. The first stem portion 31 has a circular columnar shape. The second stem portion 32 has a circular columnar shape. The diameter of the second stem portion 32 is smaller than the diameter of the first stem portion 31. The second stem portion 32 is connected to the upper end of the first stem portion 31 and is coaxial with the first stem portion 31. The valve member 30 has a step portion 34, which is a circular annular plane facing upward. The step portion 34 is provided in the part where the second stem portion 32 is connected to the first stem portion 31. The plug portion 33 has a substantially conical shape with a diameter decreasing from top to bottom. The plug portion 33 is connected to the lower end of the first stem portion 31 and is coaxial with the first stem portion 31. The plug portion 33 is disposed in the valve port 17. A variable throttle passage is formed between the plug portion 33 and the valve port 17. The plug portion 33 faces the valve port 17 and the valve seat 18. The valve port 17 is closed when the plug portion 33 is in contact with the valve seat 18. The valve port 17 is open when the plug portion 33 is separated from the valve seat 18.

The driving mechanism 40 moves the valve member 30 in the up-and-down direction (the direction of the axis L). The movement of the valve member 30 opens and closes the valve port 17. The driving mechanism 40 includes a rotor 41, a valve stem holder 42, a guide bush 43, a stopper member 44, and a fixed member 45.

The rotor 41 has a circular cylindrical shape. The outer diameter of the rotor 41 is slightly smaller than the inner diameter of the can 20. The rotor 41 is disposed inside the can 20. The rotor 41 is rotatable with respect to the valve body 10. The rotor 41 has a plurality of north (N) poles and a plurality of south (S) poles. The N poles and the S poles are disposed on the outer circumferential surface of the rotor 41. The N poles and the S poles each extend in the up-and-down direction. The N poles and the S poles are alternately arranged one after another at regular angular intervals in the circumferential direction. The rotor 41 has, for example, twelve N poles and twelve S poles. The angle between the N poles and the S poles adjacent to each other is 15 degrees.

Fig. 3 illustrates the valve stem holder 42. The valve stem holder 42 has a circular cylindrical shape. The valve stem holder 42 is open at the lower end. The valve stem holder 42 includes an upper wall portion 42a at the upper end. The upper wall portion 42a has a stem hole 42b. The valve stem holder 42 is fitted into a fitting hole 41a of the rotor 41. The valve stem holder 42 rotates together with the rotor 41. A movable stopper 42s is provided at the lower end of the outer circumferential surface of the valve stem holder 42. The movable stopper 42s is a protrusion extending radially outward. The second stem portion 32 of the valve member 30 is disposed in the stem hole 42b and is movable in the direction of the axis L. A washer 46 is disposed on the lower surface of the upper wall portion 42a of the valve stem holder 42. A valve closing spring 47 is disposed between the washer 46 and the step portion 34 of the valve member 30. The valve closing spring 47 is a coil spring and pushes the valve member 30 toward the valve seat 18. An internal thread 42c is provided on the inner circumferential surface of the valve stem holder 42. The movable stopper 42s is secured with respect to the rotor 41.

Fig. 4 illustrates the guide bush 43. The guide bush 43 includes a base portion 43a and a support portion 43b. The base portion 43a has a circular cylindrical shape. The outer circumferential surface of the base portion 43a has a planar part 43d. The base portion 43a is press-fitted into the fitting hole 11a of the body member 11, and the planar part 43d is in contact with the planar part 11d of the fitting hole 11a. This allows the central axis of the guide bush 43 to be aligned with the central axis of the body member 11 on the axis L and allows the guide bush 43 to be properly positioned with respect to the body member 11 about the axis L. The support portion 43b has a circular cylindrical shape. The outer diameter of the support portion 43b is smaller than the outer diameter of the base portion 43a. The inner diameter of the support portion 43b is equal to the inner diameter of the base portion 43a. The support portion 43b is connected to the upper end of the base portion 43a and is coaxial with the base portion 43a. An external thread 43c is provided on the outer circumferential surface of the support portion 43b. The external thread 43c is screwed into the internal thread 42c of the valve stem holder 42. The first stem portion 31 of the valve member 30 is disposed inside the guide bush 43. The guide bush 43 supports the valve member 30 so that the valve member 30 is movable in the direction of the axis L.

Fig. 5 illustrates the stopper member 44. The stopper member 44 includes a stopper body 44a. The stopper body 44a has a circular cylindrical shape. An internal thread 44c is provided on the inner circumferential surface of the stopper body 44a. A fixed stopper 44s is provided on the outer circumferential surface of the stopper body 44a. The fixed stopper 44s is a protrusion extending radially outward. The internal thread 44c is engaged with the external thread 43c until the stopper body 44a comes into contact with the base portion 43a of the guide bush 43. As a result, the stopper member 44 is fixed to the guide bush 43. The fixed stopper 44s is secured with respect to the valve body 10.

The fixed member 45 includes a fixed portion 45a and a flange portion 45b. The fixed portion 45a has a stepped circular cylindrical shape. The second stem portion 32 of the valve member 30 is disposed inside the fixed portion 45a. The fixed portion 45a is bonded to the second stem portion 32. The flange portion 45b is connected to the lower end of the fixed portion 45a. A return spring 48 is disposed such that the return spring 48 encloses the fixed member 45. The return spring 48 is a coil spring.

The motor-operated valve 5 includes the driving mechanism 40 that uses the rotation of the rotor 41 without speed reduction. The motor-operated valve 5 may include, instead of the driving mechanism 40, a driving mechanism that has a speed reduction mechanism reducing the rotational speed of the rotor 41.

The stator 60 has a circular cylindrical shape. The stator 60 includes an A-phase stator 61 and a B-phase stator 62. Fig. 6 schematically illustrates the stator 60.

The A-phase stator 61 includes a plurality of claw-pole type pole teeth 61a and 61b in the inner circumference. The tips of the pole teeth 61a point downward, while the tips of the pole teeth 61b point upward. The pole teeth 61a and the pole teeth 61b are alternately arranged one after another at regular angular intervals in the circumferential direction. The A-phase stator 61 has, for example, twelve pole teeth 61a and twelve pole teeth 61b. The angle between the pole teeth 61a and the pole teeth 61b adjacent to each other is 15 degrees. The A-phase stator 61 includes an A-phase coil 61c. When the A-phase coil 61c is energized, the pole teeth 61a and the pole teeth 61b have opposite polarities.

The B-phase stator 62 includes a plurality of claw-pole type pole teeth 62a and 62b in the inner circumference. The tips of the pole teeth 62a point downward, while the tips of the pole teeth 62b point upward. The pole teeth 62a and the pole teeth 62b are alternately arranged one after another at regular angular intervals in the circumferential direction. The B-phase stator 62 has, for example, twelve pole teeth 62a and twelve pole teeth 62b. The angle between the pole teeth 62a and the pole teeth 62b adjacent to each other is 15 degrees. The B-phase stator 62 includes a B-phase coil 62c. When the B-phase coil 62c is energized, the pole teeth 62a and the pole teeth 62b have opposite polarities.

The A-phase stator 61 is disposed coaxially with the B-phase stator 62. The A-phase stator 61 is in contact with the B-phase stator 62. When viewed in the direction of the axis L, the angle between one of the pole teeth 61a of the A-phase stator 61 and one of the pole teeth 62a of the B-phase stator 62 adjacent to each other is 7.5 degrees. In other words, the B-phase stator 62 is located at a position where the B-phase stator 62 is rotated relatively to the A-phase stator 61 about the axis L by 7.5 degrees from the position where the pole teeth 61a and the pole teeth 62a are arranged in the direction of the axis L.

The can 20 is disposed inside the stator 60. The rotor 41 is disposed inside the can 20. The stator 60 and the rotor 41 are members of a stepping motor 66.

The stepping motor 66 is connected to the motor-operated valve control device 70. Specifically, as illustrated in Fig. 7, terminals A1 and A2 of the A-phase coil 61c and terminals B1 and B2 of the B-phase coil 62c are connected to a motor driver 77 of the motor-operated valve control device 70.

The rotor 41 is rotated by pulses P (P[1] to P[8]) input to the stepping motor 66. Specifically, the rotor 41 is rotated by driving currents, corresponding to the pulses P, supplied to the stator 60 of the stepping motor 66. In this specification, "inputting the pulses P to the stepping motor 66" is synonymous with "supplying the driving currents corresponding to the pulses P to the stator 60 of the stepping motor 66".

Pulses P[1] to P[8] are input to the stepping motor 66 in sequence. An A-phase current Ia that is the driving current corresponding to the pulses P is supplied to the A-phase stator 61. A B-phase current Ib that is the driving current corresponding to the pulses P is supplied to the B-phase stator 62. A combination of the A-phase current Ia and B-phase current Ib differs for each pulse P. There are eight combinations, and this number is referred to as the number of patterns of the pulses P. "Pattern" is also referred to as "switching mode". The index numbers (1 to 8) of pulses P[1] to P[8] are pattern numbers for specifying pulses P[1] to P[8]. For example, the period of the pulse P is 8 milliseconds, and a single time period X consisting of pulses P[1] to P[8] is 64 milliseconds. The excitation mode of the stepping motor 66 is 1-2-phase excitation. The step angle of the stepping motor 66 is 3.75 degrees.

For the A-phase current Ia, an A-phase current target value Ita is set for each of pulses P[1] to P[8]. For the B-phase current Ib, a B-phase current target value Itb is set for each of pulses P[1] to P[8]. Fig. 8 illustrates an example of a correspondence between the pulses P and the A-phase current target values Ita and the B-phase current target values Itb.

"+I2" is set for pulse P[1] as the A-phase current target value Ita, and "0" is set for pulse P[1] as the B-phase current target value Itb.

"+I1" is set for pulse P[2] as the A-phase current target value Ita, and "+I1" is set for pulse P[2] as the B-phase current target value Itb.

"0" is set for pulse P[3] as the A-phase current target value Ita, and "+I2" is set for pulse P[3] as the B-phase current target value Itb.

"-I1" is set for pulse P[4] as the A-phase current target value Ita, and "+I1" is set for pulse P[4] as the B-phase current target value Itb.

"-I2" is set for pulse P[5] as the A-phase current target value Ita, and "0" is set for pulse P[5] as the B-phase current target value Itb.

"-I1" is set for pulse P[6] as the A-phase current target value Ita, and "-I1" is set for pulse P[6] as the B-phase current target value Itb.

"0" is set for pulse P[7] as the A-phase current target value Ita, and "-I2" is set for pulse P[7] as the B-phase current target value Itb.

"+I1" is set for pulse P[8] as the A-phase current target value Ita, and "-I1" is set for pulse P[8] as the B-phase current target value Itb.

Currents indicated as "+I2" and "-I2" have the same magnitude and flow in opposite directions.

Currents indicated as "+I1" and "-I1" have the same magnitude and flow in opposite directions.

Currents indicated as "+I2" and "+I1" have different magnitudes and flow in the same direction.

Fig. 9 schematically illustrates waveforms of the A-phase current Ia and the B-phase current Ib when the pulses P are input to the stepping motor 66 in ascending order. In Fig. 9, the A-phase current Ia has the same magnitude and flows in the same direction as the A-phase current target value Ita, and the B-phase current Ib has the same magnitude and flows in the same direction as the B-phase current target value Itb. In Figs. 8 and 9, the sign (+/-) indicates the direction in which the current flows. "+" indicates the direction from the terminal A1 to the terminal A2 or from the terminal B1 to the terminal B2. "-" indicates the direction from the terminal A2 to the terminal A1 or from the terminal B2 to the terminal B1. "0" indicates that no current flows.

Energization period D(1) corresponds to pulses P[2], P[3], and P[4], and the B-phase current Ib flowing through the B-phase coil 62c from the terminal B1 to the terminal B2 is supplied during energization period D(1).

Energization period D(2) corresponds to pulses P[4], P[5], and P[6], and the A-phase current Ia flowing through the A-phase coil 61c from the terminal A2 to the terminal A1 is supplied during energization period D(2).

Energization period D(3) corresponds to pulses P[6], P[7], and P[8], and the B-phase current Ib flowing through the B-phase coil 62c from the terminal B2 to the terminal B1 is supplied during energization period D(3).

Energization period D(4) corresponds to pulses P[8], P[1], and P[2], and the A-phase current Ia flowing through the A-phase coil 61c from the terminal A1 to the terminal A2 is supplied during energization period D(4).

Figs. 10 to 17 illustrate examples of positional relationships between the rotor 41 and the stator 60 when pulses P[1] to P[8] are input. In Figs. 10 to 17, the reference pole tooth 61a and the reference magnetic pole (S pole) of the rotor 41 are marked with a dot to facilitate recognition of the positional relationship between the rotor 41 and the stator 60 (the A-phase stator 61 and the B-phase stator 62).

In rotating the rotor 41 in a first direction (clockwise in Figs. 10 to 17), the pulses P are cyclically input to the stepping motor 66 in ascending order (in the order from pulse P[1] to pulse P[8]). When the rotor 41 rotates in the first direction, the screw-feed action of the internal thread 42c of the valve stem holder 42 and the external thread 43c of the guide bush 43 moves the rotor 41 and the valve stem holder 42 downward. The rotor 41 (the valve stem holder 42) pushes the valve member 30 downward via the valve closing spring 47. The valve member 30 moves downward, and the plug portion 33 comes into contact with the valve seat 18. At this time, the rotor 41 is at a valve closing position Rc. When the rotor 41 at this position further rotates in the first direction, the valve closing spring 47 is compressed and the rotor 41 further moves downward. The valve member 30 does not move downward. When the movable stopper 42s of the valve stem holder 42 comes into contact with the fixed stopper 44s of the stopper member 44, the rotation of the rotor 41 in the first direction is restricted. At this time, the rotor 41 is at a reference position Rx. The movable stopper 42s and the fixed stopper 44s constitute a stopper mechanism 49 restricting the rotation of the rotor 41 in the first direction.

In rotating the rotor 41 in a second direction (counterclockwise in Figs. 10 to 17) opposite to the first direction, the pulses P are cyclically input to the stepping motor 66 in descending order (in the order from pulse P[8] to pulse P[1]). When the rotor 41 rotates in the second direction, the screw-feed action of the internal thread 42c of the valve stem holder 42 and the external thread 43c of the guide bush 43 moves the rotor 41 and the valve stem holder 42 upward. The rotor 41 (the valve stem holder 42) pushes the fixed member 45 upward. The valve member 30 moves upward together with the fixed member 45 and separates from the valve seat 18. A valve opening position Ro is defined as the position of the rotor 41 when the fluid flow rate at the valve port 17 (i.e., the opening degree of the valve port 17) is at a predetermined value in a predetermined flow-rate measuring environment. The predetermined value is appropriately set according to the configuration, the application, or similar factors of the motor-operated valve device 1. When the rotor 41 rotates in the second direction and reaches a full-open position Rz, the valve member 30 is positioned farthest from the valve port 17, and the opening degree of the valve port 17 reaches its maximum.

The number of the pulses P required to rotate the rotor 41 from the full-open position Rz to the reference position Rx is referred to as a stroke number Ns. In other words, when the rotor 41 is at the full-open position Rz in the motor-operated valve 5 and then Ns pulses P are input to the stepping motor 66, the rotor 41 is positioned at the reference position Rx. For example, the stroke number Ns is 500. The number of the pulses P required to rotate the rotor 41 from the reference position Rx to the full-open position Rz is also the stroke number Ns.

An initialization number Ni is set based on the stroke number Ns. The initialization number Ni is a sufficient number of the pulses P for rotating the rotor 41 from the full-open position Rz to the reference position Rx. In other words, when the rotor 41 is at any position and Ni pulses P are input to the stepping motor 66, the rotor 41 is positioned at the reference position Rx. For example, the initialization number Ni ranges from 1.05 to 1.3 times the stroke number Ns.

A second preparation number N2 and a first preparation number N1 are set based on the stroke number Ns. The second preparation number N2 and the first preparation number N1 are used in an operation (referred to as an initialization operation) for positioning the rotor 41 at the reference position Rx. For example, the second preparation number N2 ranges from 0.05 to 0.3 times the stroke number Ns. The first preparation number N1 is equal to the second preparation number N2. The first preparation number N1 may be less than the second preparation number N2 and preferably ranges from 0.8 to 1 times the second preparation number N2.

In the motor-operated valve 5, the respective central axes of the valve port 17, the valve seat 18, the can 20, the valve member 30, the rotor 41, the valve stem holder 42, the guide bush 43, and the stator 60 (the A-phase stator 61 and the B-phase stator 62) are aligned with the axis L.

The motor-operated valve control device 70 includes a circuit board 71 on which electronic components (not illustrated) are mounted. As illustrated in Fig. 1, the motor-operated valve control device 70 includes a non-volatile memory 75, a communication device 76, the motor driver 77, and a computer 80. The motor-operated valve control device 70 controls the motor-operated valve 5 according to a command from the air conditioner control device 110.

The non-volatile memory 75 stores data required to be held even when power is turned off. The non-volatile memory 75 is, for example, EEPROM or flash memory.

The communication device 76 is connected to the air conditioner control device 110 via a wired communication bus 120 and can communicate with the air conditioner control device 110. The air conditioner 100 utilizes a communication system such as Local Interconnect Network (LIN) or Controller Area Network (CAN). The communication device 76 may be wirelessly connected to the air conditioner control device 110 and may wirelessly communicate with the air conditioner control device 110.

The motor driver 77 is controlled by the computer 80 and supplies the driving currents (A-phase current Ia and B-phase current Ib) to the stator 60 of the stepping motor 66.

The motor driver 77 is connected to the stator 60. Specifically, as illustrated in Fig. 7, the motor driver 77 is connected to the A-phase coil 61c and the B-phase coil 62c. The motor driver 77 supplies the A-phase current Ia to the A-phase coil 61c and supplies the B-phase current Ib to the B-phase coil 62c.

A pulse signal (PULSE) and a direction signal (DIR) are input to the motor driver 77 from the computer 80. Inputting the pulse signal to the motor driver 77 while the direction signal indicating the first direction is being input to the motor driver 77 corresponds to inputting the pulses P to the stepping motor 66 in ascending order. Inputting the pulse signal to the motor driver 77 while the direction signal indicating the second direction is being input to the motor driver 77 corresponds to inputting the pulses P to the stepping motor 66 in descending order.

As illustrated in Fig. 7, the motor driver 77 includes H-bridge circuits 77A and 77B, and a current control unit 77C. The H-bridge circuits 77A and 77B are current circuits. The motor driver 77 drives the stepping motor 66 using a bipolar driving method.

The H-bridge circuit 77A is connected to the A-phase coil 61c. The H-bridge circuit 77A includes switches SW11, SW12, SW13, and SW14 as switching elements. When a current flows through the A-phase coil 61c from the terminal A1 to the terminal A2, the switches SW11 and SW14 are turned on (the conductive state), and the switches SW12 and SW13 are turned off (the non-conductive state). When a current flows through the A-phase coil 61c from the terminal A2 to the terminal A1, the switches SW12 and SW13 are turned on, and the switches SW11 and SW14 are turned off. The switches SW11, SW12, SW13, and SW14 may be, for example, either N-channel MOSFETs or P-channel MOSFETs, or a mixture of both.

After the A-phase current Ia is supplied to the A-phase coil 61c, the switches SW11 and SW13 are turned off, and the switches SW12 and SW14 are turned on. Then, after energy decays in the circuit formed by the switches SW12 and SW14 and the A-phase coil 61c, the switches SW12 and SW14 are turned off.

The H-bridge circuit 77B is connected to the B-phase coil 62c. The H-bridge circuit 77B includes switches SW21, SW22, SW23, and SW24 as switching elements. When a current flows through the B-phase coil 62c from the terminal B1 to the terminal B2, the switches SW21 and SW24 are turned on, and the switches SW22 and SW23 are turned off. When a current flows through the B-phase coil 62c from the terminal B2 to the terminal B1, the switches SW22 and SW23 are turned on, and the switches SW21 and SW24 are turned off. The switches SW21, SW22, SW23, and SW24 may be, for example, either N-channel MOSFETs or P-channel MOSFETs, or a mixture of both.

After the B-phase current Ib is supplied to the B-phase coil 62c, the switches SW21 and SW23 are turned off, and the switches SW22 and SW24 are turned on. Then, after energy decays in the circuit formed by the switches SW22 and SW24 and the B-phase coil 62c, the switches SW22 and SW24 are turned off.

The current control unit 77C controls the H-bridge circuits 77A and 77B according to the pulse and direction signals input from the computer 80. The current control unit 77C outputs an A-phase switch-state signal (A-STATE) indicating the states of the switches SW11, SW12, SW13, and SW14 of the H-bridge circuit 77A. The current control unit 77C outputs a B-phase switch-state signal (B-STATE) indicating the states of the switches SW21, SW22, SW23, and SW24 of the H-bridge circuit 77B. The A-phase and B-phase switch-state signals are binary signals. The binary signals each have a first value (e.g., H value) and a second value (e.g., L value).

The current control unit 77C controls the H-bridge circuits 77A and 77B according to a fixed ripple current control method.

When the A-phase current Ia flowing through the A-phase coil 61c from the terminal A1 to the terminal A2 is supplied:

(1) the current control unit 77C turns off the switches SW12 and SW13,
(2) the current control unit 77C determines the magnitude of the A-phase current Ia,

(2-1) the current control unit 77C turns on the switches SW11 and SW14 when the A-phase current Ia is less than an A-phase current lower limit value Isa, and the A-phase current lower limit value Isa is a value obtained by subtracting a fixed value $\Delta I$ from the A-phase current target value Ita,
(2-2) the current control unit 77C turns off the switches SW11 and SW14 when the A-phase current Ia reaches the A-phase current target value Ita, and

(3) the current control unit 77C sets the A-phase switch-state signal to the first value when the switches SW11 and SW14 are turned on and sets the A-phase switch-state signal to the second value when the switches SW11 and SW14 are turned off.

When the A-phase current Ia flowing through the A-phase coil 61c from the terminal A2 to the terminal A1 is supplied:

(1) the current control unit 77C turns off the switches SW11 and SW14,
(2) the current control unit 77C determines the magnitude of the A-phase current Ia,

(2-1) the current control unit 77C turns on the switches SW12 and SW13 when the A-phase current Ia is less than the A-phase current lower limit value Isa,
(2-2) the current control unit 77C turns off the switches SW12 and SW13 when the A-phase current Ia reaches the A-phase current target value Ita, and

(3) the current control unit 77C sets the A-phase switch-state signal to the first value when the switches SW12 and SW13 are turned on and sets the A-phase switch-state signal to the second value when the switches SW12 and SW13 are turned off.

When the B-phase current Ib flowing through the B-phase coil 62c from the terminal B1 to the terminal B2 is supplied:

(1) the current control unit 77C turns off the switches SW22 and SW23,
(2) the current control unit 77C determines the magnitude of the B-phase current Ib,

(2-1) the current control unit 77C turns on the switches SW21 and SW24 when the B-phase current Ib is less than a B-phase current lower limit value Isb, and the B-phase current lower limit value Isb is a value obtained by subtracting a fixed value ΔI from the B-phase current target value Itb,
(2-2) the current control unit 77C turns off the switches SW21 and SW24 when the B-phase current Ib reaches the B-phase current target value Itb, and

(3) the current control unit 77C sets the B-phase switch-state signal to the first value when the switches SW21 and SW24 are turned on and sets the B-phase switch-state signal to the second value when the switches SW21 and SW24 are turned off.

When the B-phase current Ib flowing through the B-phase coil 62c from the terminal B2 to the terminal B1 is supplied:

(1) the current control unit 77C turns off the switches SW21 and SW24,
(2) the current control unit 77C determines the magnitude of the B-phase current Ib,

(2-1) the current control unit 77C turns on the switches SW22 and SW23 when the B-phase current Ib is less than the B-phase current lower limit value Isb,
(2-2) the current control unit 77C turns off the switches SW22 and SW23 when the B-phase current Ib reaches the B-phase current target value Itb, and

(3) the current control unit 77C sets the B-phase switch-state signal to the first value when the switches SW22 and SW23 are turned on and sets the B-phase switch-state signal to the second value when the switches SW22 and SW23 are turned off.

Fig. 18 illustrates an example of a waveform of the B-phase current Ib in the fixed ripple current control method and an example of a waveform of a back electromotive force (BEMF) generated in the B-phase coil 62c. The back electromotive force is a voltage generated in the B-phase coil 62c due to the rotation of the rotor 41. The B-phase current Ib flows from the terminal B1 to the terminal B2. In time periods T(1) to T(3), when the B-phase current Ib is less than the B-phase current lower limit value Isb, the switches SW21 and SW24 are turned on, increasing the B-phase current Ib (Ton). When the B-phase current Ib reaches the B-phase current target value Itb, the switches SW21 and SW24 are turned off, decreasing the B-phase current Ib (Toff). The switches SW21 and SW24 are repeatedly turned on and off according to the magnitude of the B-phase current Ib. The on-time and the off-time of each of the switches SW21 and SW24 are variable. Toff serves as the off-time of each of the switches SW21 and SW24 and is given by Expression (1) below.

$$T_{off} = \frac{L * \Delta I}{(I * R) - BEMF} \qquad \cdots \quad (1)$$

I represents the B-phase current Ib supplied to the B-phase coil 62c, R represents the resistance of the B-phase coil 62c, L represents the inductance of the B-phase coil 62c, and $\Delta I$ represents a fixed value. Expression (1) shows that Toff has a relationship with BEMF. In other words, as illustrated in Fig. 18, low BEMF results in short Toff, and high BEMF results in long Toff. Even when the direction of the B-phase current Ib is from the terminal B2 to the terminal B1, Expression (1) holds. Expression (1) also holds for the off-time of the switching element for the A-phase current Ia.

The computer 80 is a microcomputer for embedded devices and incorporates a CPU, ROM, RAM, an input/output interface, an analog-to-digital converter, and similar components in a single package. The computer 80 may incorporate the non-volatile memory 75, the communication device 76, and the motor driver 77. The CPU executes a program stored in the ROM, and the computer 80 consequently functions as a rotation control unit 81, an off-time obtaining unit 82, a state determining unit 83, and a reference-waveform setting unit 84. The computer 80 is a processor.

The rotation control unit 81 inputs the pulses P to the stepping motor 66 to rotate the rotor 41 in the first direction or the second direction. Specifically, the rotation control unit 81 controls the motor driver 77 according to the command received from the air conditioner control device 110 to supply the A-phase current Ia and the B-phase current Ib to the stator 60 (the A-phase coil 61c and the B-phase coil 62c).

The off-time obtaining unit 82 obtains the on-time and the off-time of the switching element when the A-phase current Ia for rotating the rotor 41 in the first direction is supplied to the stator 60 and when the B-phase current Ib for rotating the rotor 41 in the first direction is supplied to the stator 60.

The off-time obtaining unit 82 obtains, during the energization periods D(1) and D(3), the on-time and the off-time of the switching element for the B-phase current Ib based on the B-phase switch-state signal. The off-time obtaining unit 82 obtains, during the energization periods D(2) and D(4), the on-time and the off-time of the switching element for the A-phase current Ia based on the A-phase switch-state signal. The off-time obtaining unit 82 calculates the reciprocal of the off-time obtained during the energization periods D(1) to D(4).

The energization period D(1) includes consecutive time periods T(1) to T(n), each of which includes the on-time and the off-time. The off-time of time period T(h) (where h = 1 to n) is represented as Toff(h). Fig. 18 illustrates an example of a waveform of the B-phase current Ib in the time periods T(1) to T(3) and an example of a waveform of the back electromotive force (BEMF) generated in the B-phase coil 62c. When the energization period D(1) ends, the off-time obtaining unit 82 sets the reciprocal of the off-time of the time period T(h) to 1/Toff(h). For example, the off-time obtaining unit 82 sets the reciprocal of the off-time of the time period T(1) to 1/Toff(1), sets the reciprocal of the off-time of the time period T(2) to 1/Toff(2), and sets the reciprocal of the off-time of the time period T(3) to 1/Toff(3). The off-time obtaining unit 82 obtains reciprocals of the off-time at predetermined time intervals from the starting point to the ending point of the energization period D(1). The predetermined time intervals are, for example, 400 microseconds. The energization period D(1) corresponds to pulses P[2], P[3], and P[4] and is 24 milliseconds. The off-time obtaining unit 82 obtains 60 reciprocals of the off-times during the energization period D(1). The off-time obtaining unit 82 may exclude the time period T corresponding to the switching timing of the pulse P from the target for obtaining the reciprocal of the off-time and exclude the time period T near the switching timing of the pulse P from the target, since the B-phase current Ib exhibits relatively inconsistent behavior at these switching timings. The reciprocals of the off-times obtained by the off-time obtaining unit 82 represent a waveform of the reciprocal of the off-time during the energization period D(1). In the following description, the waveform of the reciprocal of the off-time obtained by the off-time obtaining unit 82 is referred to as "actual reciprocal waveform".

In this specification, "waveform" refers to the variation in a physical quantity over time at a fixed point. The physical quantity includes the reciprocal of the off-time. "Waveform" is visualized on a coordinate plane, with the vertical axis representing physical quantity and the horizontal axis representing time. The word "waveform" can also refer to non-visual representations, such as a data table that has physical quantity data associated with time data and is stored in the RAM of the computer 80 or the non-volatile memory 75. Additionally, "area of the waveform" refers to the area of the region enclosed by the waveform and the horizontal axis when the waveform is represented on the coordinate plane, where the vertical axis represents physical quantity and the horizontal axis both represents time and corresponds to the physical quantity of zero.

The off-time obtaining unit 82 also obtains the actual reciprocal waveforms during each of the energization periods D(2) to D(4) in the same way as during the energization period D(1).

In the initialization operation, the state determining unit 83 determines the state of the motor-operated valve 5 based on the reciprocal of the off-time obtained by the off-time obtaining unit 82. The motor-operated valve 5 has a first-rotation permitted state Sp1 and a first-rotation restricted state Sr1. The first-rotation permitted state Sp1 is a state where the rotor 41 has not reached the reference position Rx and where the rotation of the rotor 41 in the first direction is permitted.

The first-rotation restricted state Sr1 is a state where the rotor 41 has reached the reference position Rx, where the movable stopper 42s is in contact with the fixed stopper 44s, and where the rotation of the rotor 41 in the first direction is restricted.

Fig. 19 illustrates an example of graphs (waveforms) of the rotational angle of the rotor 41, the B-phase current Ib, the back electromotive force (BEMF) generated in the B-phase coil 62c, and the reciprocal (1/Toff) of the off-time of the switching element for the B-phase current Ib. In Fig. 19, the waveform enclosed by a one-dot chain line is an enlarged part of the waveform of the B-phase current Ib.

In Fig. 19, when the rotational angle of the rotor 41 increases, the rotor 41 moves toward the reference position Rx. Then, the rotor 41 reaches the reference position Rx at time point tx, and as a result, the rotation of the rotor 41 in the first direction is restricted. Before the time point tx, the motor-operated valve 5 is in the first-rotation permitted state Sp1, and after the time point tx, the motor-operated valve 5 is in the first-rotation restricted state Sr1.

Fig. 19 shows the following points regarding the waveform of the BEMF.

The waveforms of the BEMF during the energization periods D(1) before time point tx are the same.

The waveforms of the BEMF during the energization periods D(3) before time point tx are the same.

The waveforms of the BEMF during the energization periods D(1) after time point tx are the same.

The waveforms of the BEMF during the energization periods D(3) after time point tx are the same.

The waveforms of the BEMF during the energization periods D(1) after time point tx differ from the waveforms of the BEMF during the energization periods D(1) before time point tx.

The waveforms of the BEMF during the energization periods D(3) after time point tx differ from the waveforms of the BEMF during the energization periods D(3) before time point tx.

Fig. 19 shows the following points regarding the waveform of 1/Toff (the actual reciprocal waveform).

The actual reciprocal waveforms during the energization periods D(1) before time point tx are the same.

The actual reciprocal waveforms during the energization periods D(3) before time point tx are the same.

The actual reciprocal waveforms during the energization periods D(1) after time point tx are the same.

The actual reciprocal waveforms during the energization periods D(3) after time point tx are the same.

The actual reciprocal waveforms during the energization periods D(1) before time point tx are the same as the actual reciprocal waveforms during the energization periods D(3) before time point tx.

The actual reciprocal waveforms during the energization periods D(1) after time point tx differ from the actual reciprocal waveforms during the energization periods D(3) after time point tx.

The actual reciprocal waveforms during the energization periods D(1) after time point tx differ from the actual reciprocal waveforms during the energization periods D(1) before time point tx.

The actual reciprocal waveforms during the energization periods D(3) after time point tx differ from the actual reciprocal waveforms during the energization periods D(3) before time point tx.

The above points also apply to the waveform of the back electromotive force generated in the A-phase coil 61c and the waveform of the reciprocal of the off-time of the switching element for the A-phase current Ia.

Therefore, the state determining unit 83 can determine the state of the motor-operated valve 5 based on the reciprocal of the off-time.

The refrigerant enters inside the can 20. The refrigerant contains refrigerating machine oil. The viscosity of the refrigerating machine oil is high when the temperature of the refrigerant is low, and the viscosity of the refrigerating machine oil is low when the temperature of the refrigerant is high. Therefore, immediately after the motor-operated valve 5 starts performing an operation, the temperature of the refrigerant is low, resulting in a large resistance to the rotation of the rotor 41. As the operation of the motor-operated valve 5 progresses and the refrigerant is warmed by the heat from the stator 60, the resistance decreases. Since the back electromotive force is generated due to the rotation of the rotor 41, the waveform (i.e., the actual reciprocal waveform) of the reciprocal of the off-time of the switching element may change according to the temperature rise of the motor-operated valve 5 (i.e., the refrigerant).

From this, the following can be inferred.

The actual reciprocal waveform when the motor-operated valve 5 is in a cold state differs from the actual reciprocal waveform when the motor-operated valve 5 has warmed up.

The actual reciprocal waveform gradually changes its behavior until the motor-operated valve 5 has sufficiently warmed up, and the actual reciprocal waveform exhibits consistent behavior when the motor-operated valve 5 has sufficiently warmed up.

Therefore, in the initialization operation of the motor-operated valve 5, the rotor 41 is rotated to warm up the motor-operated valve 5, thereby obtaining an actual reciprocal waveform exhibiting consistent behavior.

Fig. 20 illustrates an example of an actual reciprocal waveform during the energization period D(1) when the rotor 41 of the motor-operated valve 5 in the first-rotation permitted state Sp1 is rotated in the first direction. Fig. 21 illustrates an example of an actual reciprocal waveform during the energization period D(1) when the rotor 41 of the motor-operated valve 5 in the first-rotation restricted state Sr1 is rotated in the first direction.

The state determining unit 83 determines the state of the motor-operated valve 5 by comparing the actual reciprocal waveform with the reference waveform of the reciprocal of the off-time. In the following description, the reference waveform of the reciprocal of the off-time is also simply referred to as "reference waveform".

Additionally, the state determining unit 83 determines whether the actual reciprocal waveform is similar to the reference waveform by comparing the actual reciprocal waveform with the reference waveform. When the actual reciprocal waveform is the same as the reference waveform, the state determining unit 83 also determines that "the actual reciprocal waveform is similar to the reference waveform".

The reference-waveform setting unit 84 sets the reference waveform. The reference waveform is set based on the reciprocal of the off-time obtained by the off-time obtaining unit 82. The reference-waveform setting unit 84 stores the reference waveform in the non-volatile memory 75. The reference-waveform setting unit 84 may store the reference waveform in the RAM of the computer 80.

A single reference waveform is set for each of the energization periods D(1) to D(4).

The reference waveform for the energization period D(1) is set based on the actual reciprocal waveform when the B-phase current Ib is supplied to the B-phase coil 62c in response to pulses P[2], P[3], and P[4] input to the stepping motor 66 to rotate the rotor 41 in the first direction.

The reference waveform for the energization period D(2) is set based on the actual reciprocal waveform when the A-phase current Ia is supplied to the A-phase coil 61c in response to pulses P[4], P[5], and P[6] input to the stepping motor 66 to rotate the rotor 41 in the first direction.

The reference waveform for the energization period D(3) is set based on the actual reciprocal waveform when the B-phase current Ib is supplied to the B-phase coil 62c in response to pulses P[6], P[7], and P[8] input to the stepping motor 66 to rotate the rotor 41 in the first direction.

The reference waveform for the energization period D(4) is set based on the actual reciprocal waveform when the A-phase current Ia is supplied to the A-phase coil 61c in response to pulses P[8], P[1], and P[2] input to the stepping motor 66 to rotate the rotor 41 in the first direction.

The reference waveform is stored in the non-volatile memory 75 as a data table. Reference-waveform tables C[1] to C[4], which are the reference waveforms for the energization periods D(1) to D(4), are stored in the non-volatile memory 75.

Fig. 22 illustrates an example of the reference-waveform table C[1]. In the reference-waveform table C[1], time points t, defined at predetermined intervals from the starting point (time point 0) of the energization period D(1), are each associated with a reference value rv of the reciprocal of the off-time at the corresponding time point t. The intervals between the time points t are equal to the sampling interval (400 microseconds) used by the off-time obtaining unit 82 for obtaining the reciprocal of the off-time. Each of the time points t corresponds to a time point (referred to as an obtaining time) at which the off-time obtaining unit 82 obtains the reciprocal of the off-time. The reference-waveform table C[1] includes 60 pairs of the time point t and the reference value rv. In Fig. 22, the unit of the time point t is a microsecond. The reference value rv has no unit. The unit of the time point t and the unit of the reference value rv may be proprietary units. Each of the reference-waveform tables C[2] to C[4] has the same structure as that of the reference-waveform table C[1].

The state determining unit 83 calculates a value (referred to as a difference-degree score sv) indicating a degree of difference between the actual reciprocal waveform and the reference waveform. The greater the difference-degree score sv, the greater the degree of the difference between the actual reciprocal waveform and the reference waveform. When the difference-degree score sv is greater than or equal to a predetermined difference-degree score threshold H, the actual reciprocal waveform is determined to differ from the reference waveform. The difference-degree score sv is also a value (referred to as a similarity-degree score) indicating a degree of similarity between the actual reciprocal waveform and the reference waveform. The smaller the difference-degree score sv, the greater the degree of the similarity between the actual reciprocal waveform and the reference waveform. When the difference-degree score sv is less than or equal to a predetermined similarity-degree score threshold G, the actual reciprocal waveform is determined to be similar to the reference waveform.

When the energization period D(k) (where k = 1 to 4) ends, the state determining unit 83 obtains reciprocals v of the off-times obtained by the off-time obtaining unit 82, and, for each reciprocal v, obtains a reference value rv, which is associated with a time point t in the reference-waveform table C[k], the time point t corresponding to an obtaining time tv of the reciprocal v. The state determining unit 83 calculates a value (referred to as a difference value dv) by subtracting the reference value rv from the reciprocal v. The state determining unit 83 calculates a squared value (referred to as an intermediate value dv2) of the difference value dv. The state determining unit 83 calculates a difference-degree score sv[k] by summing intermediate values dv2 calculated for the energization period D(k).

Fig. 23 illustrates an example of the actual reciprocal waveform (solid line) in the energization period D(1) and an example of the reference waveform (dashed line) for the energization period D(1). In Fig. 23, the length of each vertical line connecting the actual reciprocal waveform and the reference waveform corresponds to the difference value dv used for calculating the difference-degree score sv[1].

The difference-degree score sv is given by Expression (2) below, where v[tv] represents the reciprocal v of the off-time obtained at the obtaining time tv during the time period from the starting point t1 to the ending point t2 of the energization period D, and rv[tv] represents the reference value rv associated with the time point t in the reference-waveform table C, the time point t corresponding to the obtaining time tv.

$$sv = \sum_{tv=t1}^{t2} (v[tv] - rv[tv])^2 \quad \cdots \quad (2)$$

The state determining unit 83 determines the state of the motor-operated valve 5 based on the difference-degree score sv[k]. Specifically, the state determining unit 83 compares the difference-degree score sv[k] with the predetermined difference-degree score threshold H. The state determining unit 83 determines whether the motor-operated valve 5 is in the first-rotation permitted state Sp1 or the first-rotation restricted state Sr1, based on the result of comparing the difference-degree score sv[k] with the difference-degree score threshold H. The motor-operated valve control device 70 may have a difference-degree score threshold H[k] corresponding to the difference-degree score sv[k] for each value of "k". The difference-degree score threshold H[k] may have the same value for any "k" or may have a different value depending on "k".

Furthermore, the state determining unit 83 determines whether the actual reciprocal waveform used for calculating the difference-degree score sv[k] is similar to the reference waveform. Specifically, the state determining unit 83 compares the difference-degree score sv[k] with the predetermined similarity-degree score threshold G. The state determining unit 83 determines whether the actual reciprocal waveform is similar to the reference waveform, based on the result of comparing the difference-degree score sv[k] with the similarity-degree score threshold G. The motor-operated valve control device 70 may have a similarity-degree score threshold G[k] corresponding to the difference-degree score sv[k] for each value of "k". The similarity-degree score threshold G[k] may have the same value for any "k" or may have a different value depending on "k".

An example (Operation example 1) of the initialization operation of the motor-operated valve control device 70 is described below with reference to Figs. 24 to 28.

When the motor-operated valve control device 70, specifically the computer 80, receives an initialization command from the air conditioner control device 110 (S100), the motor-operated valve control device 70 invalidates the reference waveform stored in the non-volatile memory 75 and then starts performing the initialization operation. The initialization operation includes a second preparation operation (S200), a first preparation operation (S400), and a positioning operation (S600). The second preparation operation, the first preparation operation, and the positioning operation correspond to a second preparation step, a first preparation step, and a positioning step.

(Second preparation operation)

In the second preparation operation, the motor-operated valve control device 70 starts inputting the pulses P to the stepping motor 66 in descending order (S210 and Y in S220) to rotate the rotor 41 in the second direction. When the number of the pulses P input to the stepping motor 66 during the second preparation operation reaches a second preparation number N2 (N in S220), the motor-operated valve control device 70 stops inputting the pulses P to the stepping motor 66 (S230). The motor-operated valve control device 70 finishes the second preparation operation, and starts performing the first preparation operation.

(First preparation operation)

When the first preparation operation is started, the reference waveform is not yet set. "Not yet set" includes the following cases: the reference waveform has never been set; the reference waveform has been set but never been used and is to be overwritten by a new reference waveform; and the reference waveform has been set but is regarded as invalid.

In the first preparation operation, the motor-operated valve control device 70 starts inputting the pulses P to the stepping motor 66 in ascending order (S410 and Y in S420) to rotate the rotor 41 in the first direction. When the number of the pulses P input to the stepping motor 66 during the first preparation operation reaches K (N in S420), the motor-operated valve control device 70 obtains the actual reciprocal waveform (S430) and sets a reference waveform (S440). The actual reciprocal waveform is obtained starting from the first energization period D that follows the input of the K-th pulse P during the first preparation operation. K is a natural number greater than or equal to one and less than or equal to the first preparation number N1. In the motor-operated valve control device 70, K = 1. Preferably, K is less than or equal to half of the first preparation number N1.

In Steps S430 and S440, the motor-operated valve control device 70 obtains the actual reciprocal waveform during the energization period D(k) (where k = 1 to 4), and stores the actual reciprocal waveform during the energization period D(k) in the non-volatile memory 75 as the reference waveform (i.e., the reference-waveform table C[k]) for the energization period D(k). In other words, the motor-operated valve control device 70 sets the reference waveform.

When the reference waveform is set, the motor-operated valve control device 70 starts performing a determination operation (S450 to S500).

The motor-operated valve control device 70 obtains the actual reciprocal waveform during the energization period D(k) (S450). The motor-operated valve control device 70 calculates the difference-degree score sv[k] (S460) using the actual reciprocal waveform during the energization period D(k) and the reference waveform (i.e., the reference-waveform table C[k]) for the energization period D(k).

The motor-operated valve control device 70 determines whether the actual reciprocal waveform is similar to the reference waveform (S470).

Specifically, the motor-operated valve control device 70 compares the difference-degree score sv[k] with the similarity-degree score threshold G. When the difference-degree score sv[k] is less than or equal to the similarity-degree score threshold G, the motor-operated valve control device 70 determines that the actual reciprocal waveform during the energization period D(k) is similar to the reference waveform for the energization period D(k). When the difference-degree score sv[k] is greater than the similarity-degree score threshold G, the motor-operated valve control device 70 determines that the actual reciprocal waveform during the energization period D(k) is not similar to the reference waveform for the energization period D(k).

When the actual reciprocal waveform during the energization period D(k) is determined to be similar to the reference waveform for the energization period D(k) (Y in S480), the motor-operated valve control device 70 stores this actual reciprocal waveform in the non-volatile memory 75 as a new reference waveform (i.e., the reference-waveform table C[k]) (S490).

When the actual reciprocal waveform during the energization period D(k) is determined not to be similar to the reference waveform for the energization period D(k) (N in S480), the motor-operated valve control device 70 maintains the present reference waveform (i.e., the reference-waveform table C[k]). In other words, the motor-operated valve control device 70 does not update the reference waveform.

When the number of the pulses P input to the stepping motor 66 during the first preparation operation is less than the first preparation number N1 (Y in S500), the motor-operated valve control device 70 repeats the operation above (S450 to S500).

When the number of the pulses P input to the stepping motor 66 during the first preparation operation reaches the first preparation number N1 (N in S500), the motor-operated valve control device 70 finishes the first preparation operation and starts performing the positioning operation.

(Positioning operation)

In the positioning operation following the first preparation operation, the motor-operated valve control device 70 inputs the pulses P to the stepping motor 66 in ascending order to rotate the rotor 41 in the first direction.

The motor-operated valve control device 70 obtains the actual reciprocal waveform during the energization period D(k) (S610). The motor-operated valve control device 70 calculates the difference-degree score sv[k] (S620) using the actual reciprocal waveform during the energization period D(k) and the reference waveform (i.e., the reference-waveform table C[k]) for the energization period D(k).

The motor-operated valve control device 70 determines the state of the motor-operated valve 5 (S630).

Specifically, the motor-operated valve control device 70 compares the difference-degree score sv[k] with the difference-degree score threshold H, and compares the difference-degree score sv[j] with the difference-degree score threshold H, where sv[j] is calculated immediately before sv[k]: j = k - 1 when k = 2, 3, or 4; and j = 4 when k = 1. When the difference-degree score sv[k] is greater than or equal to the difference-degree score threshold H and the difference-degree score sv[j] is greater than or equal to the difference-degree score threshold H, the motor-operated valve control device 70 determines that the motor-operated valve 5 is in the first-rotation restricted state Sr1. When the difference-degree score sv[k] is less than the difference-degree score threshold H or the difference-degree score sv[j] is less than the difference-degree score threshold H, the motor-operated valve control device 70 determines that the motor-operated valve 5 is in the first-rotation permitted state Sp1.

Alternatively, the motor-operated valve control device 70 may determine the state of the motor-operated valve 5 by comparing only the difference-degree score sv[k] with the difference-degree score threshold H. Specifically, the motor-operated valve control device 70 compares the difference-degree score sv[k] for time period X[n] (where n is a natural number) consisting of pulses P[1] to P[8] with the difference-degree score threshold H, and compares the difference-degree score sv[k] for time period X[n - 1] immediately preceding time period X[n] with the difference-degree score threshold H. When the difference-degree score sv[k] for time period X[n] is greater than or equal to the difference-degree score threshold H and the difference-degree score sv[k] for time period X[n - 1] is greater than or equal to the difference-degree score threshold H, the motor-operated valve control device 70 determines that the motor-operated valve 5 is in the first-rotation restricted state Sr1. When difference-degree scores sv[k] for three or more consecutive time periods X are all greater than or equal to the difference-degree score threshold H, the motor-operated valve control device 70 may determine that the motor-operated valve 5 is in the first-rotation restricted state Sr1. When the difference-degree score sv[k] for time period X[n] is less than the difference-degree score threshold H or the difference-degree score sv[k] for time period X[n - 1] is less than the difference-degree score threshold H, the motor-operated valve control device 70 determines that the motor-operated valve 5 is in the first-rotation permitted state Sp1.

When the motor-operated valve 5 is in the first-rotation restricted state Sr1 (Y in S640), the motor-operated valve control device 70 determines that the rotor 41 is positioned at the reference position Rx. The motor-operated valve control device 70 notifies the success of the initialization operation to the air conditioner control device 110 (S660) and stops inputting the pulses P to the stepping motor 66 (S680). The motor-operated valve control device 70 finishes the positioning operation (i.e., the initialization operation).

When the motor-operated valve 5 is in the first-rotation permitted state Sp1 and the number of the pulses P input to the stepping motor 66 during the first preparation and positioning operations is less than or equal to the initialization number Ni (N in S640 and N in S650), the motor-operated valve control device 70 repeats the operation above (S610 to S650).

When the motor-operated valve 5 is in the first-rotation permitted state Sp1 and the number of the pulses P input to the stepping motor 66 during the first preparation and positioning operations exceeds the initialization number Ni (N in S640 and Y in S650), the motor-operated valve control device 70 determines that the motor-operated valve 5 has failed. The motor-operated valve control device 70 notifies the failure of the initialization operation to the air conditioner control device 110 (S670) and stops inputting the pulses P to the stepping motor 66 (S680). The motor-operated valve control device 70 finishes the positioning operation (i.e., the initialization operation). The motor-operated valve control device 70 may perform the determination operation above during the positioning operation. Specifically, immediately before Step S620 in the positioning operation, the motor-operated valve control device 70 performs the same operations as those in Steps S460 to S490 in the first preparation operation.

When the initialization operation succeeds, the rotor 41 is positioned at the reference position Rx. The motor-operated valve control device 70 inputs the pulses P to the stepping motor 66 in descending order when rotating the rotor 41 in the second direction from the reference position Rx.

In Operation example 1, Steps S430, S450, and S610 correspond to the off-time obtaining step, Steps S440 and S490 correspond to the reference-waveform setting step, and Step S630 corresponds to the state determining step.

Another example (Operation example 2) of the initialization operation of the motor-operated valve control device 70 is described below with reference to Figs. 29 to 30.

In Operation example 2, the reference waveform (i.e., the reference-waveform table C[k]), a first reference waveform (i.e., a first reference-waveform table C1[k]), and a second reference waveform (i.e., a second reference-waveform table C2[k]) are stored in the non-volatile memory 75. The first reference-waveform table C1[k] and the second reference-waveform table C2[k] have the same configuration as the reference-waveform table C[k].

When the motor-operated valve control device 70 receives the initialization command from the air conditioner control device 110 (S100), the motor-operated valve control device 70 invalidates the reference waveform, the first reference waveform, and the second reference waveform stored in the non-volatile memory 75 and then starts performing the initialization operation. The initialization operation includes the second preparation operation (S200), a first preparation operation (S700), and the positioning operation (S600). The second preparation and positioning operations of Operation example 2 are the same as those of Operation example 1, and detailed descriptions of these operations are omitted.

(First preparation operation)

When the first preparation operation is started, the reference waveform, the first reference waveform, and the second reference waveform are not yet set.

In the first preparation operation, the motor-operated valve control device 70 starts inputting the pulses P to the stepping motor 66 in ascending order (S710 and Y in S720) to rotate the rotor 41 in the first direction. When the number of the pulses P input to the stepping motor 66 during the first preparation operation reaches K (N in S720), the motor-operated valve control device 70 obtains the actual reciprocal waveform (S730) and sets the first reference waveform (S740). The actual reciprocal waveform is obtained starting from the first energization period D that follows the input of the K-th pulse P during the first preparation operation.

In Steps S730 and S740, the motor-operated valve control device 70 obtains the actual reciprocal waveform during the energization period D(k), and stores the actual reciprocal waveform during the energization period D(k) in the non-volatile memory 75 as the first reference-waveform (i.e., the first reference-waveform table C1[k]). In other words, the motor-operated valve control device 70 sets the first reference waveform.

When the first reference waveform is set, the motor-operated valve control device 70 starts performing a first determination operation (S750 to S930).

The motor-operated valve control device 70 obtains the actual reciprocal waveform during the energization period D(k) (S750). The motor-operated valve control device 70 calculates a first difference-degree score sv1[k] (S760) using the actual reciprocal waveform during the energization period D(k) and the first reference waveform (i.e., the first reference-waveform table C1[k]) for the energization period D(k). The motor-operated valve control device 70 calculates the first difference-degree score sv1[k] in the same way as the difference-degree score sv[k].

The motor-operated valve control device 70 determines whether the actual reciprocal waveform is similar to the first reference waveform (S770).

Specifically, the motor-operated valve control device 70 compares the first difference-degree score sv1[k] with the similarity-degree score threshold G. When the first difference-degree score sv1[k] is less than or equal to the similarity-degree score threshold G, the motor-operated valve control device 70 determines that the actual reciprocal waveform during the energization period D(k) is similar to the first reference waveform for the energization period D(k). When the first difference-degree score sv1[k] is greater than the similarity-degree score threshold G, the motor-operated valve control device 70 determines that the actual reciprocal waveform during the energization period D(k) is not similar to the first reference waveform for the energization period D(k).

When the actual reciprocal waveform during the energization period D(k) is determined to be similar to the first reference waveform for the energization period D(k) (Y in S780), the motor-operated valve control device 70 stores this actual reciprocal waveform in the non-volatile memory 75 as a new first reference waveform (i.e., the first reference-waveform table C1[k]) (S790).

When the actual reciprocal waveform during the energization period D(k) is determined for the first time not to be similar to the first reference waveform for the energization period D(k) (N in S780), the motor-operated valve control device 70 stores this actual reciprocal waveform in the non-volatile memory 75 as the second reference waveform (i.e., the second reference-waveform table C2[k]) (S820). In other words, the motor-operated valve control device 70 sets the second reference waveform.

When the number of the pulses P input to the stepping motor 66 during the first preparation operation is less than the first preparation number N1 (Y in S800), the motor-operated valve control device 70 repeats the operation above (S750 to S800).

When the number of the pulses P input to the stepping motor 66 during the first preparation operation reaches the first preparation number N1 (N in S800), the motor-operated valve control device 70 sets the first reference waveform (i.e., the first reference-waveform table C1[k]) as the reference waveform (i.e., the reference-waveform table C[k]) (S810). The motor-operated valve control device 70 finishes the first preparation operation and starts performing the positioning operation.

When the second reference waveform is set, the motor-operated valve control device 70 starts performing a second determination operation (S830 to S930).

The motor-operated valve control device 70 obtains the actual reciprocal waveform during the energization period D(k) (S830). The motor-operated valve control device 70 calculates the first difference-degree score sv1[k] using the actual reciprocal waveform during the energization period D(k) and the first reference waveform (i.e., the first reference-waveform table C1[k]) for the energization period D(k), and calculates a second difference-degree score sv2[k] using the actual reciprocal waveform during the energization period D(k) and the second reference waveform (i.e., the second reference-waveform table C2[k]) for the energization period D(k) (S840). The motor-operated valve control device 70 calculates the first difference-degree score sv1[k] and the second difference-degree score sv2[k] in the same way as the difference-degree score sv[k].

The motor-operated valve control device 70 determines whether the actual reciprocal waveform is similar to the first reference waveform and determines whether the actual reciprocal waveform is similar to the second reference waveform (S850).

Specifically, the motor-operated valve control device 70 compares the first difference-degree score sv1[k] with the similarity-degree score threshold G. When the first difference-degree score sv1[k] is less than or equal to the similarity-degree score threshold G, the motor-operated valve control device 70 determines that the actual reciprocal waveform during the energization period D(k) is similar to the first reference waveform for the energization period D(k). When the first difference-degree score sv1[k] is greater than the similarity-degree score threshold G, the motor-operated valve control device 70 determines that the actual reciprocal waveform during the energization period D(k) is not similar to the first reference waveform for the energization period D(k).

The motor-operated valve control device 70 compares the second difference-degree score sv2[k] with the similarity-degree score threshold G. When the second difference-degree score sv2[k] is less than or equal to the similarity-degree score threshold G, the motor-operated valve control device 70 determines that the actual reciprocal waveform during the energization period D(k) is similar to the second reference waveform for the energization period D(k). When the second difference-degree score sv2[k] is greater than the similarity-degree score threshold G, the motor-operated valve control device 70 determines that the actual reciprocal waveform during the energization period D(k) is not similar to the second reference waveform for the energization period D(k).

When the actual reciprocal waveform during the energization period D(k) is determined to be similar to the first reference waveform for the energization period D(k) and not to be similar to the second reference waveform for the energization period D(k) (Y in S860 and N in S870), the motor-operated valve control device 70 stores this actual reciprocal waveform in the non-volatile memory 75 as a new first reference waveform (i.e., the first reference-waveform table C1[k]) (S900).

When the actual reciprocal waveform during the energization period D(k) is determined not to be similar to the first reference waveform for the energization period D(k) and to be similar to the second reference waveform for the energization period D(k) (N in S860 and Y in S880), the motor-operated valve control device 70 stores this actual reciprocal waveform in the non-volatile memory 75 as a new second reference waveform (i.e., the second reference-waveform table C2[k]) (S910).

When the actual reciprocal waveform during the energization period D(k) is determined not to be similar to the first reference waveform for the energization period D(k) and not to be similar to the second reference waveform for the energization period D(k) (N in S860 and N in S880), the motor-operated valve control device 70 maintains the present first reference waveform (i.e., the first reference-waveform table C1[k]) and the present second reference waveform (i.e., the second reference-waveform table C2[k]).

When the actual reciprocal waveform during the energization period D(k) is determined to be similar to the first reference waveform for the energization period D(k) and to be similar to the second reference waveform for the energization period D(k) (Y in S860 and Y in S870), the motor-operated valve control device 70 determines which of the first and second reference waveforms this actual reciprocal waveform is more similar to (S890).

Specifically, the motor-operated valve control device 70 compares the first difference-degree score sv1[k] with the second difference-degree score sv2[k]. When the first difference-degree score sv1[k] is less than or equal to the second difference-degree score sv2[k] (sv1[k] ≤ sv2[k]), the motor-operated valve control device 70 determines that the actual reciprocal waveform during the energization period D(k) is more similar to the first reference waveform for the energization period D(k) than to the second reference waveform for the energization period D(k). When the first difference-degree score sv1[k] is greater than the second difference-degree score sv2[k] (sv1[k] > sv2[k]), the motor-operated valve control device 70 determines that the actual reciprocal waveform during the energization period D(k) is more similar to the second reference waveform for the energization period D(k) than to the first reference waveform for the energization period D(k).

When the actual reciprocal waveform during the energization period D(k) is determined to be more similar to the first reference waveform for the energization period D(k) than to the second reference waveform for the energization period D(k) (Y in S890), the motor-operated valve control device 70 stores this actual reciprocal waveform in the non-volatile memory 75 as a new first reference waveform (i.e., the first reference-waveform table C1[k]) (S900).

When the actual reciprocal waveform during the energization period D(k) is determined to be more similar to the second reference waveform for the energization period D(k) than to the first reference waveform for the energization period D(k) (N in S890), the motor-operated valve control device 70 stores this actual reciprocal waveform in the non-volatile memory 75 as a new second reference waveform (i.e., the second reference-waveform table C2[k]) (S910).

When the actual reciprocal waveform during the energization period D(k) is determined to be similar to the first reference waveform for the energization period D(k) and to be similar to the second reference waveform for the energization period D(k) (Y in S860 and Y in S870), the motor-operated valve control device 70 may store this actual reciprocal waveform in the non-volatile memory 75 as a new first reference waveform (i.e., the first reference-waveform table C1[k]) and as a new second reference waveform (i.e., the second reference-waveform table C2[k]).

When the number of the pulses P input to the stepping motor 66 during the first preparation operation is less than the first preparation number N1 (Y in S920), the motor-operated valve control device 70 repeats the operation above (S830 to S920).

When the number of the pulses P input to the stepping motor 66 during the first preparation operation reaches the first preparation number N1 (N in S920), the motor-operated valve control device 70 sets, as the reference waveform, one of the first and second reference waveforms with the greater setting count (S930). In other words, when the setting count (referred to as a first setting count) of the actual reciprocal waveform as the first reference waveform exceeds the setting count (referred to as a second setting count) of the actual reciprocal waveform as the second reference waveform, the motor-operated valve control device 70 sets the first reference waveform as the reference waveform. When the second setting count exceeds the first setting count, the motor-operated valve control device 70 sets the second reference waveform as the reference waveform. When the first setting count is equal to the second setting count, the motor-operated valve control device 70 sets the first reference waveform as the reference waveform. The first setting count is the count of setting the actual reciprocal waveform as the first reference waveform during Steps S740, S790, and S900. The second setting count is the count of setting the actual reciprocal waveform as the second reference waveform during Steps S820 and S910. The motor-operated valve control device 70 finishes the first preparation operation and starts performing the positioning operation.

In Operation example 2, Steps S730, S750, and S830 correspond to the off-time obtaining step, Steps S740, S790, S810, S820, S900, S910, and S930 correspond to the reference-waveform setting step, and Step S630 corresponds to the state determining step.

The motor-operated valve device 1 includes the motor-operated valve 5 and the motor-operated valve control device 70. The motor-operated valve 5 includes the valve body 10 that has the valve port 17, the stepping motor 66 that includes the rotor 41 and the stator 60, the valve member 30 that faces the valve port 17 and moves toward the valve port 17 when the rotor 41 rotates in the first direction, and the stopper mechanism 49 that restricts the rotation of the rotor 41 in the first direction when the rotor 41 is at the reference position Rx. The stator 60 is connected to the H-bridge circuits 77A and 77B serving as current circuits that supply the driving currents. The H-bridge circuits 77A and 77B each have the switching element. The H-bridge circuit 77A is configured to operate according to the method in which the switching element is turned on when the A-phase current Ia is less than the A-phase current lower limit value Isa and turned off when the A-phase current Ia reaches the A-phase current target value Ita. The H-bridge circuit 77B is configured to operate according to the method in which the switching element is turned on when the B-phase current Ib is less than the B-phase current lower limit value Isb and turned off when the B-phase current Ib reaches the B-phase current target value Itb.

The motor-operated valve control device 70 (the off-time obtaining unit 82) obtains the off-time of the switching element of the H-bridge circuit 77A when the A-phase current Ia for rotating the rotor 41 in the first direction is supplied to the stator 60 and obtains the off-time of the switching element of the H-bridge circuit 77B when the B-phase current Ib for rotating the rotor 41 in the first direction is supplied to the stator 60. The motor-operated valve control device 70 (the state determining unit 83) determines, based on the off-time, whether the motor-operated valve 5 is in the first-rotation restricted state Sr1.

With this configuration, when the motor-operated valve control device 70 determines that the motor-operated valve 5 capable of normal operation is in the first-rotation restricted state Sr1, the rotor 41 is at the reference position Rx. As a result, the motor-operated valve control device 70 stops the rotation of the rotor 41 in the first direction when determining that the motor-operated valve 5 is in the first-rotation restricted state Sr1, thereby enabling the duration of the initialization operation to be reduced. Additionally, a long-lasting noise after the rotor 41 is positioned at the reference position Rx can be suppressed.

The motor-operated valve control device 70 determines, based on the off-time of the switching element of the H-bridge circuit 77A and the off-time of the switching element of the H-bridge circuit 77B, whether the motor-operated valve 5 is in the first-rotation restricted state Sr1. Consequently, a component, such as a rotational angle sensor, for determining the state of the motor-operated valve 5 based on the rotation of the rotor 41 is not required, enabling the configuration of the motor-operated valve 5 and the motor-operated valve control device 70 to be simplified.

For example, when the state of the motor-operated valve 5 is determined based on the back electromotive force, since the back electromotive force is obtained when no driving current flows through the stator 60, the timing of obtaining the back electromotive force is limited. Alternatively, when the state of the motor-operated valve 5 is determined based on the off-time, the off-time can be obtained even when the driving current flows through the stator 60. Therefore, the motor-operated valve control device 70 can determine at an appropriate timing whether the motor-operated valve 5 is in the first-rotation restricted state Sr1.

The motor-operated valve control device 70 obtains the waveform (i.e., the actual reciprocal waveform) of the reciprocal of the off-time and determines, based on the degree of the difference between the actual reciprocal waveform and the reference waveform of the reciprocal of the off-time, whether the motor-operated valve 5 is in the first-rotation restricted state Sr1. As a result, the state of the motor-operated valve 5 can be determined more accurately than with a configuration in which the state of the motor-operated valve 5 is determined based on the area or maximum amplitude of the actual reciprocal waveform. The motor-operated valve control device 70 may determine the state of the motor-operated valve 5 based on the difference between the actual reciprocal waveform and the reference waveform. For example, the motor-operated valve control device 70 may determine, based on the difference between the area of the actual reciprocal waveform and the area of the reference waveform, or the difference between the amplitude of the actual reciprocal waveform and the amplitude of the reference waveform, whether the motor-operated valve 5 is in the first-rotation restricted state Sr1.

The reference waveform is set based on the actual reciprocal waveform obtained when the A-phase current Ia for rotating the rotor 41 in the first direction is supplied to the stator 60 and based on the actual reciprocal waveform obtained when the B-phase current Ib for rotating the rotor 41 in the first direction is supplied to the stator 60. The motor-operated valve control device 70 calculates the difference-degree score sv indicating the degree of the difference between the actual reciprocal waveform and the reference waveform, and determines, based on the result of comparing the difference-degree score sv with the difference-degree score threshold H, whether the motor-operated valve 5 is in the first-rotation restricted state Sr1. With this configuration, the motor-operated valve control device 70 can determine the state of the motor-operated valve 5 more accurately.

The reference waveform is represented as the data table in which the time point t is associated with the reference value rv of the reciprocal of the off-time at the time point t. The motor-operated valve control device 70 calculates the intermediate value dv2 that is the squared value of the difference value between the reciprocal v of the off-time at the obtaining time tv corresponding to the time point t and the reference value rv associated with this time point t. The motor-operated valve control device 70 calculates the difference-degree score sv by summing the intermediate values dv2. With this configuration, the difference-degree score sv more appropriately reflects the degree of difference in the shapes of the waveforms than the area and maximum amplitude of the waveform. As a result, the motor-operated valve control device 70 can determine the state of the motor-operated valve 5 more accurately.

The difference-degree score sv is not limited to being obtained by the calculation using Expression (2) above. For example, the difference-degree score may relate to the transition in magnitude of the reciprocal v at respective obtaining times tv. Specifically, the motor-operated valve control device 70 calculates the difference value dv between the reciprocal v of the off-time at the obtaining time tv corresponding to the time point t and the reference value rv associated with this time point t. The difference value dv is calculated as an absolute value. The motor-operated valve control device 70 uses the number of the difference values dv, which are calculated for the energization period D and are greater than or equal to a predetermined difference threshold, as the difference-degree score. This difference-degree score also appropriately reflects the degree of the difference in the shapes of the waveforms.

The motor-operated valve control device 70 (the rotation control unit 81) inputs the pulse P to the stepping motor 66 to rotate the rotor 41. The motor-operated valve control device 70 (the reference-waveform setting unit 84) sets the reference waveform. The H-bridge circuit 77A supplies the stator 60 with the A-phase current Ia, corresponding to the pulse P, in response to the pulse P being input to the stepping motor 66. The H-bridge circuit 77B supplies the stator 60 with the B-phase current Ib, corresponding to the pulse P, in response to the pulse P being input to the stepping motor 66. The motor-operated valve control device 70 performs the second preparation operation for inputting the second preparation number N2 of the pulses P to the stepping motor 66 to rotate the rotor 41 in the second direction. The motor-operated valve control device 70 performs the first preparation operation, following the second preparation operation, for inputting the first preparation number N1 of the pulses P to the stepping motor 66 to rotate the rotor 41 in the first direction. The first preparation number N1 is equal to the second preparation number N2. The motor-operated valve control device 70 sets as the reference waveform the actual reciprocal waveform obtained during the first preparation operation. With this configuration, the motor-operated valve control device 70 sets as the reference waveform the actual reciprocal waveform obtained at a point after some time has elapsed from the start of an operation of the motor-operated valve 5. As a result, the actual reciprocal waveform, which is obtained by actually using the motor-operated valve 5 and exhibits relatively consistent behavior, can be set as the reference waveform, thereby determining the state of the motor-operated valve 5 more accurately.

When the motor-operated valve control device 70 starts performing the first preparation operation in Operation example 1, the reference waveform is not yet set. The motor-operated valve control device 70 performs the determination operation for determining, based on the degree of the difference between the actual reciprocal waveform obtained during the first preparation operation and the reference waveform, whether the actual reciprocal waveform is similar to the reference waveform. The motor-operated valve control device 70 starts performing the determination operation after the reference waveform is set. When the number of the pulses P input to the stepping motor 66 reaches K in the first preparation operation, the motor-operated valve control device 70 sets the actual reciprocal waveform obtained by the motor-operated valve control device 70 as the reference waveform. When the motor-operated valve control device 70 determines in the determination operation that the actual reciprocal waveform is similar to the reference waveform, the motor-operated valve control device 70 sets the actual reciprocal waveform used for this determination as the reference waveform. When the motor-operated valve control device 70 determines in the determination operation that the actual reciprocal waveform is not similar to the reference waveform, the motor-operated valve control device 70 maintains the reference waveform. With this configuration, the motor-operated valve control device 70 can set the reference waveform that is suitable for the motor-operated valve 5.

In the determination operation, the motor-operated valve control device 70 calculates the difference-degree score sv indicating the degree of the difference between the actual reciprocal waveform and the reference waveform, and determines, based on the result of comparing the difference-degree score sv with the similarity-degree score threshold G, whether the actual reciprocal waveform is similar to the reference waveform. With this configuration, the motor-operated valve control device 70 can set the reference waveform that is more suitable for the motor-operated valve 5.

When the motor-operated valve control device 70 starts performing the first preparation operation in Operation example 2, the first reference waveform and the second reference waveform are not yet set. The motor-operated valve control device 70 performs the first determination operation for determining, based on the degree of the difference between the actual reciprocal waveform obtained during the first preparation operation and the first reference waveform, whether the actual reciprocal waveform is similar to the first reference waveform. The motor-operated valve control device 70 performs the second determination operation for determining, based on the degree of the difference between the actual reciprocal waveform obtained during the first preparation operation and the second reference waveform, whether the actual reciprocal waveform is similar to the second reference waveform. The motor-operated valve control device 70 starts performing the first determination operation after the first reference waveform is set. The motor-operated valve control device 70 starts performing the second determination operation after the second reference waveform is set. When the number of the pulses P input to the stepping motor 66 reaches K in the first preparation operation, the motor-operated valve control device 70 sets the actual reciprocal waveform obtained by the motor-operated valve control device 70 as the first reference waveform. When the motor-operated valve control device 70 determines in the first determination operation that the actual reciprocal waveform is similar to the first reference waveform, the motor-operated valve control device 70 sets the actual reciprocal waveform used for this determination as the first reference waveform. When the motor-operated valve control device 70 determines in the first determination operation that the actual reciprocal waveform is not similar to the first reference waveform, the motor-operated valve control device 70 maintains the first reference waveform. When the motor-operated valve control device 70 determines for the first time in the first determination operation that the actual reciprocal waveform is not similar to the first reference waveform, the motor-operated valve control device 70 sets the actual reciprocal waveform used for this determination as the second reference waveform. When the motor-operated valve control device 70 determines in the second determination operation that the actual reciprocal waveform is similar to the second reference waveform, the motor-operated valve control device 70 sets the actual reciprocal waveform used for this determination as the second reference waveform. When the motor-operated valve control device 70 determines in the second determination operation that the actual reciprocal waveform is not similar to the second reference waveform, the motor-operated valve control device 70 maintains the second reference waveform. When the first preparation operation is finished and the first setting count is greater than the second setting count, the motor-operated valve control device 70 sets the first reference waveform as the reference waveform. When the first preparation operation is finished and the second setting count is greater than the first setting count, the motor-operated valve control device 70 sets the second reference waveform as the reference waveform. The first setting count is the count of setting the actual reciprocal waveform as the first reference waveform. The second setting count is the count of setting the actual reciprocal waveform as the second reference waveform. With this configuration, the motor-operated valve control device 70 can set the reference waveform that is suitable for the motor-operated valve 5. When the first setting count is equal to the second setting count, the motor-operated valve control device 70 sets the first reference waveform as the reference waveform. Alternatively, when the first setting count is equal to the second setting count, the motor-operated valve control device 70 may set the second reference waveform as the reference waveform.

When the motor-operated valve control device 70 determines in the first determination operation that the actual reciprocal waveform is similar to the first reference waveform and determines in the second determination operation that the actual reciprocal waveform is similar to the second reference waveform,

(1) when the actual reciprocal waveform used for these determinations is more similar to the first reference waveform than to the second reference waveform, the motor-operated valve control device 70 sets the actual reciprocal waveform used for these determinations as the first reference waveform, and
(2) when the actual reciprocal waveform used for these determinations is more similar to the second reference waveform than to the first reference waveform, the motor-operated valve control device 70 sets the actual reciprocal waveform used for these determinations as the second reference waveform. With this configuration, a single actual reciprocal waveform can be prevented from being set as the first reference waveform and as the second reference waveform.

In the first determination operation, the motor-operated valve control device 70 calculates the first difference-degree score sv1 indicating the degree of the difference between the actual reciprocal waveform and the first reference waveform, and determines, based on the result of comparing the first difference-degree score sv1 with the similarity-degree score threshold G, whether the actual reciprocal waveform is similar to the first reference waveform. In the second determination operation, the motor-operated valve control device 70 calculates the second difference-degree score sv2 indicating the degree of the difference between the actual reciprocal waveform and the second reference waveform, and determines, based on the result of comparing the second difference-degree score sv2 with the similarity-degree score threshold G, whether the actual reciprocal waveform is similar to the second reference waveform. With this configuration, the motor-operated valve control device 70 can set the first reference waveform, the second reference waveform, and the reference waveform that are more suitable for the motor-operated valve 5.

The motor-operated valve control device 70 may perform the second and first preparation operations multiple times, and set as the reference waveform the actual reciprocal waveform obtained during the first preparation operation performed most recently. With this configuration, the motor-operated valve 5 can be sufficiently warmed up, and an actual reciprocal waveform exhibiting more consistent behavior can be set as the reference waveform.

The motor-operated valve control device 70 performs the positioning operation, following the first preparation operation, for inputting the pulse P to the stepping motor 66 to rotate the rotor 41 in the first direction. The motor-operated valve control device 70 stops inputting the pulse P to the stepping motor 66 when the motor-operated valve control device 70 determines in the positioning operation that the motor-operated valve 5 is in the first-rotation restricted state Sr1. The motor-operated valve control device 70 determines that the motor-operated valve 5 has failed when the number of the pulses P input to the stepping motor 66 in the first preparation and positioning operations exceeds the initialization number Ni. With this configuration, the motor-operated valve control device 70 can stop the rotation of the rotor 41 in the first direction in a simple and quick manner compared with a configuration, for example, in which the air conditioner control device 110 is notified of the motor-operated valve 5 being in the first-rotation restricted state Sr1, a stopping command from the air conditioner control device 110 is received, and subsequently the initialization operation is stopped. Additionally, the motor-operated valve control device 70 can detect that the motor-operated valve 5 has failed.

The motor-operated valve control device 70 sets as the reference waveform the actual reciprocal waveform obtained during the initialization operation. For example, the motor-operated valve control device 70 may be preset with the reference waveform that is the actual reciprocal waveform obtained using the motor-operated valve 5 before shipment from the factory. In the initialization operation, the motor-operated valve control device 70 with this configuration starts inputting the pulse P to the stepping motor 66 in ascending order without performing the second and first preparation operations, and performs the positioning operation.

In this specification, the terms indicating shapes, such as "circular cylindrical" and "circular columnar", are also used for members and portions of the members substantially having the shapes indicated by the terms. For example, "circular cylindrical member" includes a circular cylindrical member and a substantially circular cylindrical member. Additionally, in this specification, the term "the same" may include strictly the same and substantially the same.

The embodiments of the present invention are described above. The present invention, however, is not limited to these embodiments. Embodiments obtained by a person skilled in the art appropriately adding, removing, or modifying components according to the embodiments described above, and an embodiment obtained by appropriately combining features of the embodiments are included in the scope of the present invention without departing from the spirit of the present invention.

Reference Signs List

1 ... motor-operated valve device, 5 ... motor-operated valve, 10 ... valve body, 11 ... body member, 11a ... fitting hole, 11b ... through hole, 11d ... planar part, 13 ... connection member, 14 ... valve chamber, 15 ... first conduit, 16 ... second conduit, 17 ... valve port, 18 ... valve seat, 20 ... can, 30 ... valve member, 31 ... first stem portion, 32 ... second stem portion, 33 ... plug portion, 34 ... step portion, 40 ... driving mechanism, 41 ... rotor, 41a ... fitting hole, 42 ... valve stem holder, 42a ... upper wall portion, 42b ... stem hole, 42c ... internal thread, 42s ... movable stopper, 43 ... guide bush, 43a ... base portion, 43b ... support portion, 43c ... external thread, 43d ... planar part, 44 ... stopper member, 44a ... stopper body, 44c ... internal thread, 44s ... fixed stopper, 45 ... fixed member, 45a ... fixed portion, 45b ... flange portion, 46 ... washer, 47 ... valve closing spring, 48 ... return spring, 49 ... stopper mechanism, 60 ... stator, 61 ... A-phase stator, 61a ... pole teeth, 61b ... pole teeth, 61c ... A-phase coil, 62 ... B-phase stator, 62a ... pole teeth, 62b ... pole teeth, 62c ... B-phase coil, 66 ... stepping motor, 70 ... motor-operated valve control device, 71 ... circuit board, 75 ... non-volatile memory, 76 ... communication device, 77 ... motor driver, 77A ... H-bridge circuit, 77B ... H-bridge circuit, 77C ... current control unit, 80 ... computer, 81 ... rotation control unit, 82 ... off-time obtaining unit, 83 ... state determining unit, 84 ... reference-waveform setting unit, 100 ... air conditioner, 101 ... compressor, 102 ... condenser, 103 ... evaporator, 105 ... pipe, 110 ... air conditioner control device, 120 ... wired communication bus, L ... axis.

Claims

1. A motor-operated valve control device for controlling a motor-operated valve including a valve body that has a valve port, a stepping motor that includes a rotor and a stator, a valve member that faces the valve port and moves toward the valve port when the rotor rotates in a first direction, and a stopper mechanism that restricts rotation of the rotor in the first direction when the rotor is at a reference position, the stator being connected to a current circuit that supplies a driving current, the current circuit including a switching element and being configured to operate according to a method in which the switching element is turned on when the driving current is less than a lower limit value obtained by subtracting a fixed value from a target value and turned off when the driving current reaches the target value, the motor-operated valve control device comprising:

an off-time obtaining unit configured to obtain an off-time of the switching element when the driving current for rotating the rotor in the first direction is supplied to the stator; and
a state determining unit configured to determine, based on the off-time, whether the motor-operated valve is in a first-rotation restricted state where the rotation of the rotor in the first direction is restricted.

2. The motor-operated valve control device according to Claim 1, wherein the state determining unit is configured to determine, based on a degree of difference between a waveform of a reciprocal of the off-time obtained by the off-time obtaining unit and a reference waveform of the reciprocal of the off-time, whether the motor-operated valve is in the first-rotation restricted state.

3. The motor-operated valve control device according to Claim 2,

wherein the reference waveform is set based on the waveform of the reciprocal of the off-time obtained when the driving current for rotating the rotor in the first direction is supplied to the stator, and

wherein the state determining unit is configured to calculate a difference-degree score indicating the degree of the difference between the waveform of the reciprocal of the off-time obtained by the off-time obtaining unit and the reference waveform, and determine, based on a result of comparing the difference-degree score with a difference-degree score threshold, whether the motor-operated valve is in the first-rotation restricted state.

4. The motor-operated valve control device according to Claim 3,

wherein the reference waveform is represented as a data table including a time point and a reference value of the reciprocal of the off-time at the time point, the time point and the reference value being associated with each other, wherein the state determining unit is configured to calculate an intermediate value that is a squared value of a difference value between the reciprocal of the off-time obtained by the off-time obtaining unit at an obtaining time corresponding to the time point and the reference value associated with the time point, and

wherein the state determining unit is configured to calculate the difference-degree score by summing intermediate values each of which is the intermediate value.

5. The motor-operated valve control device according to Claim 2, further comprising:

a rotation control unit configured to input a pulse to the stepping motor to rotate the rotor; and

a reference-waveform setting unit configured to set the reference waveform,

wherein the current circuit supplies the stator with the driving current corresponding to the pulse, in response to the pulse being input to the stepping motor,

wherein the rotation control unit is configured to perform a second preparation operation for inputting a second preparation number of pulses to the stepping motor to rotate the rotor in a second direction and perform a first preparation operation, following the second preparation operation, for inputting a first preparation number of pulses to the stepping motor to rotate the rotor in the first direction, the first preparation number being less than or equal to the second preparation number, and

wherein the reference-waveform setting unit is configured to set as the reference waveform the waveform of the reciprocal of the off-time obtained by the off-time obtaining unit during the first preparation operation.

6. A motor-operated valve device comprising: the motor-operated valve and the motor-operated valve control device according to Claim 1.

7. A method for controlling a motor-operated valve including a valve body that has a valve port, a stepping motor that includes a rotor and a stator, a valve member that faces the valve port and moves toward the valve port when the rotor rotates in a first direction, and a stopper mechanism that restricts rotation of the rotor in the first direction when the rotor is at a reference position, the stator being connected to a current circuit that supplies a driving current, the current circuit including a switching element and being configured to operate according to a method in which the switching element is turned on when the driving current is less than a lower limit value obtained by subtracting a fixed value from a target value and turned off when the driving current reaches the target value,

the method comprising:

an off-time obtaining step for obtaining an off-time of the switching element when the driving current for rotating the rotor in the first direction is supplied to the stator; and

a state determining step for determining, based on the off-time, whether the motor-operated valve is in a first-rotation restricted state where the rotation of the rotor in the first direction is restricted.

# FIG.1

# FIG.2

# FIG.3

(A)

(B)

# FIG.4

L

43

43b

43c

43d

43a

# FIG.5

44

44c

44a

44s

L

(A)

44

44c

44a

L

44s

(B)

FIG.6

# FIG.7

FIG.8

| | P[1] | P[2] | P[3] | P[4] | P[5] | P[6] | P[7] | P[8] | NOTE |
|---|---|---|---|---|---|---|---|---|---|
| A-PHASE CURRENT TARGET VALUE | +I2 | +I1 | 0 | −I1 | −I2 | −I1 | 0 | +I1 | +:A1→A2<br>O:OFF<br>−:A2→A1 |
| B-PHASE CURRENT TARGET VALUE | 0 | +I1 | +I2 | +I1 | 0 | −I1 | −I2 | −I1 | +:B1→B2<br>O:OFF<br>−:B2→B1 |

# FIG.9

# FIG.10

| | P[1] | | 61a | 61b | | | 61 |
|---|---|---|---|---|---|---|---|
| A-PHASE STATOR | +0− | | S \ N \ S •N S \ N / S | | | | 41 |
| ROTOR | | | N S N •S N S N | | | | |
| B-PHASE STATOR | +0− | | | 62a 62b | | | 62 |

# FIG.11

# FIG.12

| | P[3] | 61a 61b | |
|---|---|---|---|
| A-PHASE STATOR | + 0 − | | 61 |
| ROTOR | | N S N S N S | 41 |
| B-PHASE STATOR | + 0 − | S N S N S N S | 62 |

62a 62b

# FIG.13

# FIG.14

# FIG.15

# FIG.16

P[7]

A-PHASE STATOR

ROTOR

B-PHASE STATOR

| S | N | S | N | S | N | S |

# FIG.17

# FIG.18

# FIG.19

# FIG.20

# FIG.21

# FIG.22

| # | TIME POINT t | REFERENCE VALUE rv |
|---|---|---|
| 0 | 0 | 0.0147 |
| 1 | 400 | 0.0161 |
| 2 | 800 | 0.0169 |
| 3 | 1200 | 0.0172 |
| 4 | 1600 | 0.0171 |
| 5 | 2000 | 0.0167 |
| 6 | 2400 | 0.0161 |
| 7 | 2800 | 0.0155 |
| 8 | 3200 | 0.0144 |
| 9 | 3600 | 0.0138 |
| ⋮ | ⋮ | ⋮ |
| 54 | 21600 | 0.0129 |
| 55 | 22000 | 0.0124 |
| 56 | 22400 | 0.0120 |
| 57 | 22800 | 0.0117 |
| 58 | 23200 | 0.0115 |
| 59 | 23600 | 0.0113 |

FIG.23

1/Toff

—— : ACTUAL RECIPROCAL WAVEFORM

- - - - : REFERENCE WAVEFORM

Time

# FIG.24

```
                    ┌─────────────┐
                    │   START     │
                    └──────┬──────┘
                           │
                           ▼
        ┌──────────────────────────────┐
        │  RECEIVE INITIALIZATION       │ ──── S100
        │  COMMAND                      │
        └───────────────┬──────────────┘
                        │
                        ▼
        ┌──────────────────────────────┐
        │  SECOND PREPARATION           │ ──── S200
        │  OPERATION                    │
        └───────────────┬──────────────┘
                        │
                        ▼
        ┌──────────────────────────────┐
        │  FIRST PREPARATION            │ ──── S400
        │  OPERATION                    │
        └───────────────┬──────────────┘
                        │
                        ▼
        ┌──────────────────────────────┐
        │  POSITIONING                  │ ──── S600
        │  OPERATION                    │
        └───────────────┬──────────────┘
                        │
                        ▼
                ┌─────────────┐
                │    END      │
                └─────────────┘
```

# FIG.25

SECOND PREPARATION OPERATION

START INPUTTING PULSES P IN DESCENDING ORDER — S210

IS NUMBER OF INPUT PULSES P LESS THAN SECOND PREPARATION NUMBER N2? — S220

Y

N

STOP INPUTTING PULSES P — S230

R E T U R N

# FIG.26

```
  ┌─────────────────────────┐
  │  FIRST PREPARATION      │
  │  OPERATION              │
  └─────────────────────────┘
              │
              ▼
  ┌─────────────────────────┐       S410
  │ START INPUTTING PULSES P │
  │ IN ASCENDING ORDER       │
  └─────────────────────────┘
              │
              ▼
        ◇ IS NUMBER OF INPUT PULSES P    S420
    Y ◇   LESS THAN K?  ◇
              │ N
              ▼
  ┌──────────────────────────────────┐    S430
  │ OBTAIN ACTUAL RECIPROCAL WAVEFORM │
  └──────────────────────────────────┘
              │
              ▼
  ┌──────────────────────────┐    S440
  │   SET REFERENCE WAVEFORM  │
  └──────────────────────────┘
              │
              ▼
            ( 1 )
```

# FIG.27

```
                    ( 1 )
                      │
    ┌─────────────────┘
    │                 │
    │    ┌────────────▼─────────────────┐
    │    │ OBTAIN ACTUAL RECIPROCAL WAVEFORM │──── S450
    │    └────────────┬─────────────────┘
    │                 │
    │        ┌────────▼────────┐
    │        │   CALCULATE     │──── S460
    │        │ DIFFERENCE-DEGREE SCORE │
    │        └────────┬────────┘
    │                 │
    │     ┌───────────▼─────────────┐
    │     │ DETERMINE WHETHER ACTUAL │──── S470
    │     │ RECIPROCAL WAVEFORM IS SIMILAR │
    │     │ TO REFERENCE WAVEFORM │
    │     └───────────┬─────────────┘
    │                 │
    │            ╱────▼────╲        S480
    │          ╱ IS ACTUAL   ╲ ──
    │        ╱ RECIPROCAL WAVEFORM ╲  N
    │        ╲ SIMILAR TO REFERENCE ╱────┐
    │          ╲  WAVEFORM?  ╱          │
    │            ╲────┬────╱            │
    │                 │ Y               │
    │        ┌────────▼────────┐  S490  │
    │        │ SET REFERENCE WAVEFORM │──│
    │        └────────┬────────┘        │
    │                 │◄────────────────┘
    │                 │         S500
    │            ╱────▼────╲  ──
    │          ╱ IS NUMBER OF ╲
    │   Y    ╱ INPUT PULSES P LESS THAN ╲
    └───────╲ FIRST PREPARATION ╱
              ╲   NUMBER N1?  ╱
                ╲────┬────╱
                     │ N
                ┌────▼─────┐
                │ R E T U R N │
                └──────────┘
```

# FIG.28

```
        ┌─────────────────────┐
        │    POSITIONING      │
        │    OPERATION        │
        └──────────┬──────────┘
                   │
      ┌────────────▼───────────────────────┐
      │  OBTAIN ACTUAL RECIPROCAL WAVEFORM  │─── S610
      └────────────┬───────────────────────┘
                   │
          ┌────────▼───────────┐
          │   CALCULATE        │─── S620
          │ DIFFERENCE-DEGREE SCORE │
          └────────┬───────────┘
                   │
          ┌────────▼───────────┐
          │ DETERMINE STATE OF │─── S630
          │ MOTOR-OPERATED VALVE │
          └────────┬───────────┘
                   │
               ╱───▼───╲
             ╱    IS     ╲
           ╱ MOTOR-OPERATED ╲── S640
          ╱ VALVE IN FIRST-ROTATION ╲    Y
          ╲   RESTRICTED   ╱──────────────┐
           ╲   STATE Sr1? ╱               │
             ╲─────┬─────╱                │
                   │ N                    │
               ╱───▼───╲                  │
             ╱           ╲── S650          │
       N   ╱ DOES NUMBER OF ╲             │
      ┌───╱  INPUT PULSES P EXCEED ╲      │
      │   ╲   INITIALIZATION    ╱         │
      │    ╲   NUMBER Ni?      ╱          │
      │      ╲────┬─────╱                 │
      │           │ Y                     │
      │  ┌────────▼────────┐   ┌──────────▼─────────┐
      │  │ NOTIFY FAILURE OF │  │ NOTIFY SUCCESS OF  │
      │  │ INITIALIZATION    │  │ INITIALIZATION     │
      │  │ OPERATION ─ S670  │  │ OPERATION ─ S660   │
      │  └────────┬────────┘   └──────────┬─────────┘
      │           │◄──────────────────────┘
      │  ┌────────▼────────┐
      │  │ STOP INPUTTING PULSES P │─── S680
      │  └────────┬────────┘
      │           │
      │      ┌────▼────┐
      └──────│ RETURN  │
             └─────────┘
```

# FIG.29

```
                    ┌─────────────┐
                    │   S T A R T │
                    └──────┬──────┘
                           │
                           ▼
         ┌──────────────────────────────────┐
         │                                  │ ⌒ S100
         │  RECEIVE INITIALIZATION COMMAND  │
         │                                  │
         └────────────────┬─────────────────┘
                          │
                          ▼
         ┌┬──────────────────────────────┬┐
         ││                              ││ ⌒ S200
         ││  SECOND PREPARATION          ││
         ││  OPERATION                   ││
         ││                              ││
         └┴───────────────┬──────────────┴┘
                          │
                          ▼
         ┌┬──────────────────────────────┬┐
         ││                              ││ ⌒ S700
         ││  FIRST PREPARATION           ││
         ││  OPERATION                   ││
         ││                              ││
         └┴───────────────┬──────────────┴┘
                          │
                          ▼
         ┌┬──────────────────────────────┬┐
         ││                              ││ ⌒ S600
         ││  POSITIONING                 ││
         ││  OPERATION                   ││
         ││                              ││
         └┴───────────────┬──────────────┴┘
                          │
                          ▼
                    ┌─────────────┐
                    │   E N D     │
                    └─────────────┘
```

# FIG.30

```
        ╭─────────────────────╮
        │  FIRST PREPARATION  │
        │     OPERATION       │
        ╰─────────────────────╯
                  │
                  ▼
        ┌─────────────────────┐
        │ START INPUTTING PULSES P ├──── S710
        │  IN ASCENDING ORDER │
        └─────────────────────┘
                  │
                  ▼
              ◇─────────◇
         Y  ╱             ╲   ──── S720
        ◄──╱ IS NUMBER OF INPUT PULSES P ╲
           ╲    LESS THAN K?   ╱
            ╲               ╱
              ◇─────────◇
                  │ N
                  ▼
        ┌─────────────────────────────┐
        │ OBTAIN ACTUAL RECIPROCAL WAVEFORM ├──── S730
        └─────────────────────────────┘
                  │
                  ▼
        ┌─────────────────────────────┐
        │ SET FIRST REFERENCE WAVEFORM ├──── S740
        └─────────────────────────────┘
                  │
                  ▼
                 (1)
```

# FIG.31

① 

OBTAIN ACTUAL RECIPROCAL WAVEFORM —— S750

CALCULATE FIRST DIFFERENCE-DEGREE SCORE —— S760

DETERMINE WHETHER ACTUAL RECIPROCAL WAVEFORM IS SIMILAR TO FIRST REFERENCE WAVEFORM —— S770

IS ACTUAL RECIPROCAL WAVEFORM SIMILAR TO FIRST REFERENCE WAVEFORM? —— S780

N

Y

SET FIRST REFERENCE WAVEFORM —— S790

SET SECOND REFERENCE WAVEFORM —— S820

②

IS NUMBER OF INPUT PULSES P LESS THAN FIRST PREPARATION NUMBER N1? —— S800

Y

N

SET REFERENCE WAVEFORM —— S810

③

RETURN

## FIG.32

(2)

OBTAIN ACTUAL RECIPROCAL WAVEFORM — S830

CALCULATE FIRST AND SECOND
DIFFERENCE-DEGREE SCORES — S840

DETERMINE WHETHER ACTUAL
RECIPROCAL WAVEFORM IS SIMILAR TO
FIRST AND SECOND REFERENCE WAVEFORMS — S850

IS
ACTUAL RECIPROCAL
WAVEFORM SIMILAR TO
FIRST REFERENCE
WAVEFORM? — S860

N

Y

IS
ACTUAL RECIPROCAL
WAVEFORM SIMILAR TO
SECOND REFERENCE
WAVEFORM? — S870

N

Y

IS
ACTUAL RECIPROCAL
WAVEFORM SIMILAR TO
SECOND REFERENCE
WAVEFORM? — S880

N

Y

IS ACTUAL
RECIPROCAL WAVEFORM
MORE SIMILAR TO FIRST REFERENCE
WAVEFORM THAN TO SECOND
REFERENCE WAVEFORM? — S890

N

Y

SET FIRST REFERENCE WAVEFORM — S900

SET SECOND REFERENCE WAVEFORM — S910

IS NUMBER OF INPUT
PULSES P LESS THAN FIRST
PREPARATION
NUMBER N1? — S920

Y

N

SET REFERENCE WAVEFORM — S930

(3)

## INTERNATIONAL SEARCH REPORT

International application No.

**PCT/JP2023/045452**

### A. CLASSIFICATION OF SUBJECT MATTER

*F16K 31/04*(2006.01)i; *F16K 37/00*(2006.01)i; *H02P 8/08*(2006.01)i
FI:   F16K31/04 A; F16K37/00 D; H02P8/08

According to International Patent Classification (IPC) or to both national classification and IPC

### B. FIELDS SEARCHED

Minimum documentation searched (classification system followed by classification symbols)

F16K31/04; F16K37/00; H02P8/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2020-16247 A (FUJI KOKI CORP.) 30 January 2020 (2020-01-30)<br>entire text, all drawings | 1-7 |
| A | JP 58-116096 A (TOYOTA JIDOSHA KABUSHIKI KAISHA) 11 July 1983 (1983-07-11)<br>entire text, all drawings | 1-7 |
| A | JP 2003-329698 A (SAGINOMIYA SEISAKUSHO, INC.) 19 November 2003 (2003-11-19)<br>entire text, all drawings | 1-7 |
| A | JP 8-4931 A (HITACHI, LTD.) 12 January 1996 (1996-01-12)<br>entire text, all drawings | 1-7 |

☐ Further documents are listed in the continuation of Box C.       ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 March 2024** | **19 March 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

| | International application No. |
| --- | --- |
| | **PCT/JP2023/045452** |

| Patent document cited in search report | | | Publication date (day/month/year) | Patent family member(s) | | | Publication date (day/month/year) |
| --- | --- | --- | --- | --- | --- | --- | --- |
| JP | 2020-16247 | A | 30 January 2020 | EP | 3828452 | A1 | |
| | | | | entire text, all drawings | | | |
| | | | | WO | 2020/021836 | A1 | |
| | | | | CN | 112469936 | A | |
| JP | 58-116096 | A | 11 July 1983 | (Family: none) | | | |
| JP | 2003-329698 | A | 19 November 2003 | (Family: none) | | | |
| JP | 8-4931 | A | 12 January 1996 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019130928 A